# EUROPÄISCHE PATENTSCHRIFT

(11) **EP 4 631 468 B1**
(45) Veröffentlichungstag und Bekanntmachung des Hinweises auf die Patenterteilung: **21.10.2026**
(21) Anmeldenummer: 24221088.8
(22) Anmeldetag: 18.12.2024
(51) Int. Cl.: A61C 1/00, A61C 1/06

(54) **MEDIZINISCHE, INSBESONDERE DENTALE, BEHANDLUNGSVORRICHTUNG MIT EINEM FLÜSSIGKEITSBEHÄLTER UND DERARTIGER FLÜSSIGKEITSBEHÄLTER**
MEDICAL, IN PARTICULAR DENTAL, TREATMENT DEVICE WITH A LIQUID CONTAINER AND SUCH A LIQUID CONTAINER
DISPOSITIF DE TRAITEMENT MÉDICAL, EN PARTICULIER DENTAIRE, COMPRENANT UN RÉSERVOIR DE LIQUIDE ET UN TEL RÉSERVOIR DE LIQUIDE

(30) Priorität: 08.04.2024 EP 24168881; 04.06.2024 EP 24179749
(43) Veröffentlichungstag der Anmeldung: 15.10.2025
(73) Patentinhaber: W & H Dentalwerk Bürmoos GmbH, 5111 Bürmoos (AT)
(72) Erfinder: SINZINGER, Markus, 5124 Haigermoos (AT); LANG, Thomas, 5421 Adnet (AT)
(74) Vertreter: Benda, Ralf

(56) Entgegenhaltungen:
- WO-A2-02/26153
- US-A- 5 286 192
- US-A1- 2006 078 844

## Beschreibung

Die vorliegende Erfindung betrifft eine medizinische, insbesondere dentale Behandlungsvorrichtung mit einem Flüssigkeitsbehälter, der eine Flüssigkeit, zum Beispiel eine Kühlflüssigkeit, fasst und die Flüssigkeit der medizinischen, insbesondere dentalen Behandlungsvorrichtung zur Abgabe an die Umgebung zur Verfügung stellt. Die vorliegende Erfindung bezieht sich auch auf einen Flüssigkeitsbehälter, der an eine derartige medizinische, insbesondere dentale Behandlungsvorrichtung anschließbar ist.

Aus den Anmeldeschriften US 2021/000569 A1 und WO 02/26153 A1 sind medizinische, insbesondere dentale Behandlungsvorrichtung mit einem Flüssigkeitsbehälter bekannt. Zur Förderung der darin gefassten Flüssigkeit, zum Beispiel einer Kühlflüssigkeit, sind verschiedene Fördervorrichtungen vorgeschlagen: Pumpen, ein verschiebbarer Kolben, eine verschiebbare Membran und eine Feder. Diese bekannten Fördervorrichtungen weisen mehrere Nachteile auf, zum Beispiel benötigen Pumpen viel Platz und eine Energiezufuhr zum Betrieb der Pumpe; es besteht die Gefahr, dass mechanische Komponenten brechen und damit die Fördervorrichtung bzw. die medizinische, insbesondere dentale Behandlungsvorrichtung nicht mehr verwendbar ist; zusätzliches Gewicht durch die Fördervorrichtungen, was insbesondere bei kabellosen Behandlungsvorrichtung, wie sie in den genannten Anmeldeschriften offenbart sind, zu einer zusätzlichen Belastung des Arms oder der Hand des Anwenders oder der Anwenderin führt.

Gemäß einem Aspekt besteht somit die Aufgabe, eine alternative Versorgung einer, vorzugsweise kabellosen, medizinischen, insbesondere dentalen Behandlungsvorrichtung mit einer Flüssigkeit zu schaffen, welche die im Vorstehenden genannten Nachteile nicht aufweist oder zumindest reduziert. Die Versorgung der Behandlungsvorrichtung mit der Flüssigkeit soll insbesondere möglichst platzsparend und durch zuverlässige, langlebige Komponenten mit wenig Gewicht bewerkstelligt sein.

Vorrichtungen für das Implantieren dentaler Implantate sind gemäß dem Stand der Technik als Tischgeräte ausgebildet, siehe zum Beispiel Figur 1 der Patentanmeldung US 2018/0153466 A1. Eine derartige Vorrichtung umfasst ein Tisch-Steuergerät, das auf einer Arbeitsfläche abstellbar ist und üblicherweise ein im Wesentlichen quaderförmiges Außengehäuse aufweist. In dem Außengehäuse ist eine Steuervorrichtung zum Steuern des Tisch-Steuergeräts und/ oder eines mit dem Tisch-Steuergerät verbundenen dentalen Hand- oder Winkelstücks vorgesehen. Über eine Anschlussvorrichtung am Außengehäuse und einen daran anschließbaren Versorgungsschlauch ist das dentale Hand- oder Winkelstück und ein elektrischer Antriebsmotor mit dem Tisch-Steuergerät verbunden. Der Versorgungsschlauch versorgt den elektrischen Antriebsmotor mit elektrischer Antriebsenergie und Steuersignalen. Das Hand- oder Winkelstück ist lösbar mit einem Implantationswerkzeug verbindbar, das durch den Antriebsmotor in eine rotierende Bewegung versetzbar ist. Im oder am Außengehäuse ist des Weiteren eine Fördervorrichtung zum Fördern einer Behandlungs- und/ oder Kühlflüssigkeit vorgesehen. Die Fördervorrichtung umfasst eine Pumpe, welche eine Kühl- und Spülflüssigkeit von dem Tisch-Steuergerät über einen sich außerhalb des Versorgungsschlauchs und des Antriebsmotors bis zum Kopf des Hand- oder Winkelstücks erstreckenden Kühlmittelschlauch fördert. Am Tisch-Steuergerät ist des Weiteren üblicherweise eine Mensch-Maschine-Schnittstelle zum Bedienen, Einstellen und/ oder Auswählen von Parametern des Tisch-Steuergeräts und/ oder des mit dem Tisch-Steuergerät verbundenen Hand- oder Winkelstück und eine grafische Anzeigevorrichtung vorgesehen. Zum Steuern der dentalen Implantations-Vorrichtungen während der Behandlung ist eine Fußsteuerung kommunikativ mit dem Tisch-Steuergerät verbunden.

Viele Anwender empfinden diesen seit Jahrzehnten im Wesentlichen unveränderten Aufbau von dentalen Implantations-Vorrichtungen während der praktischen Arbeit hinderlich. Insbesondere der mehrteilige Aufbau mit dem Tisch-Steuergerät, dem davon entfernten Hand- oder Winkelstück und der ebenfalls davon entfernten Fußsteuerung und die Verbindung dieser Komponenten mit dem Versorgungsschlauch und gegebenenfalls einer Steuerleitung zwischen der Fußsteuerung und dem Tisch-Steuergerät sowie der Kühlmittelschlauch schränkt die Anwender in ihrer Bewegungsfreiheit ein und erfordert zusätzliche Aufmerksamkeit.

Gemäß einem weiteren Aspekt besteht daher die Aufgabe, eine dentale Vorrichtung für das Implantieren dentaler Implantate zu schaffen, die den Anwendern das Arbeiten mit der dentalen Implantations-Vorrichtung erleichtert und es ihnen ermöglicht, der Behandlung mehr Aufmerksamkeit zu widmen.

Diese Aufgaben werden gemäß der vorliegenden Erfindung durch eine medizinische, insbesondere dentale Behandlungsvorrichtung mit den Merkmalen des Anspruchs 1, einen Flüssigkeitsbehälter mit den Merkmalen des Anspruchs 9, der Verwendung eines Flüssigkeitsbehälters mit den Merkmalen des Anspruchs 15 gelöst. Besonders vorteilhafte Ausführungsformen sind in den Unteransprüchen angeführt.

Der Flüssigkeitsbehälter, welcher die abgebbare oder abzugebende Flüssigkeit fasst und lösbar an die medizinische, insbesondere dentale Behandlungsvorrichtung anschließbar ist, weist eine Außenwand auf, die einen Behälterinnenraum des Flüssigkeitsbehälters von der Umgebung abgrenzt. In dem Behälterinnenraum ist ein flexibler Beutel mit einem Beutelvolumen, in dem die Flüssigkeit, insbesondere eine Spül- und/ oder Kühlflüssigkeit, aufgenommen ist, und ein unter Druck stehendes Gas, vorgesehen, jedoch befindet sich das unter Druck stehende Gas außerhalb des Beutelvolumens. Der Flüssigkeitsbehälter weist des Weiteren ein Ventil mit einem Ventilrohr auf, das mit dem Beutelvolumen in Fluidverbindung steht, wobei das Ventil zwischen einer geschlossenen Position, in der die in dem Beutelvolumen aufgenommene Flüssigkeit nicht aus dem flexiblen Beutel entweichen kann, und einer geöffneten Position, in der die in dem Beutelvolumen aufgenommene Flüssigkeit durch das Ventilrohr aus dem flexiblen Beutel entweichen kann, schaltbar ist, wobei in der geöffneten Position der Druck, den das unter Druck stehende Gas auf den flexiblen Beutel ausübt, die Flüssigkeit aus dem flexiblen Beutel in das Ventilrohr treibt. Ein Konnektor des Flüssigkeitsbehälters verbindet den Flüssigkeitsbehälter mit der medizinischen, insbesondere dentalen, Behandlungsvorrichtung derart, dass die Flüssigkeit aus dem flexiblen Beutel und durch das Ventilrohr in eine Fluid- oder Flüssigkeitsleitung der medizinischen, insbesondere dentalen, Behandlungsvorrichtung förderbar ist.

Anstelle der aus dem Stand der Technik bekannten mechanischen Fördervorrichtungen ist die Förderung der Flüssigkeit, insbesondere Spül- und/ oder Kühlflüssigkeit, aus dem Flüssigkeitsbehälter durch das unter Druck stehende Gas bewerkstelligt. Überraschenderweise reicht der Druck des unter Druck stehenden Gases aus, die Flüssigkeit bis in die Flüssigkeitsabgabevorrichtung, welche zur Abgabe der Flüssigkeit von der medizinischen, insbesondere dentalen, Behandlungsvorrichtung in die Umgebung ausgebildet ist, und insbesondere bis in die Umgebung zu fördern. Somit sind besonders bevorzugt in der medizinischen, insbesondere dentalen, Behandlungsvorrichtung keine mechanischen Fördervorrichtungen zur Förderung der Flüssigkeit notwendig, insbesondere keine Pumpen oder ähnliche Vorrichtungen. Der Entfall der mechanischen Fördervorrichtungen verringert somit in vorteilhafter Weise das Gewicht, erspart Platz, insbesondere innerhalb der Behandlungsvorrichtung, und eliminiert die Gefahr eines Defekts mechanischer Teile.

Der flexible Beutel steht aufgrund des im Flüssigkeitsbehälter oder Behälterinnenraum eingeschlossenen, unter Druck stehenden Gases unter Überdruck, wodurch die Flüssigkeit bei geöffneter Position des Ventils unter Druck in das Ventilrohr bzw. die medizinische, insbesondere dentale Behandlungsvorrichtung förderbar ist, ohne dass hierfür Luft aus der Umgebung in den Flüssigkeitsbehälter oder den flexiblen Beutel fließt, wie dies zum Beispiel bei Pumpvorrichtungen vorkommt. In vorteilhafter Weise, insbesondere wenn der flexible Beutel eine sterile oder keimfreie Flüssigkeit enthält, wird somit eine Kontamination des flexiblen Beutels und/ oder der darin gefassten Flüssigkeit durch eindringende Umgebungsluft und darin enthaltene Keime oder Verunreinigungen vermieden.

Die Außenwand des Flüssigkeitsbehälters ist vorzugsweise aus Metall, zum Beispiel Stahl oder Aluminium, oder Kunststoff gefertigt, wodurch in vorteilhafter Weise eine sichere Aufbewahrung der unter Druck stehenden Fluide im Behälterinnenraum erreicht ist. Die Außenwand des Flüssigkeitsbehälters weist vorzugsweise eine zylindrische Form auf, kann jedoch auch andere Formen einnehmen, zum Beispiel quaderförmig. Die Außenwand weist insbesondere eine Öffnung auf, zum Beispiel an einer Grund- oder Deckfläche eines zylindrischen Flüssigkeitsbehälters, durch den sich das Ventilrohr und/ oder zumindest ein Teil des Ventils und/ oder ein Rohr, welches das Ventil mit dem flexiblen Beutel verbindet, erstreckt. Damit wird in vorteilhafter Weise eine unkomplizierte Förderung der Flüssigkeit aus dem flexiblen Beutel ermöglicht.

Der in dem Behälterinnenraum aufgenommene flexible Beutel ist vorzugsweise aus einer oder mehreren, miteinander verbundenen und/ oder laminierten Kunststofffolien gefertigt, von denen gegebenenfalls zumindest eine metallisch beschichtet ist. Derartige Kunststofffolien umfassen zum Beispiel Kunststoffe aus der Gruppe der Weich-Polyethylene, Nylon oder Polyester. Die metallische Beschichtung umfasst zum Beispiel Aluminium. Die genannten Kunststofffolien kombinieren in vorteilhafter Weise hohe Flexibilität mit ausreichender Stabilität, so dass trotz des herrschenden Drucks im Behälterinnenraum die Flüssigkeit zuverlässig gefasst ist. Insbesondere aufgrund seiner flexiblen und/ oder elastischen Außenhülle ist das Beutelvolumen des flexiblen Beutels veränderbar, insbesondere passt sich die flexible Außenhülle und/ oder das Beutelvolumen im Wesentlichen der im flexiblen Beutel aufgenommenen Flüssigkeitsmenge an.

Der flexible Beutel fasst vorzugsweise ein Flüssigkeitsvolumen von etwa 30 ml bis etwa 100 ml, insbesondere etwa 35 ml bis etwa 70 ml, besonders bevorzugt etwa 50 ml. Somit ist in vorteilhafter Weise sichergestellt, dass ausreichend Flüssigkeit, insbesondere Spül- und/ oder Kühlflüssigkeit, für zumindest eine (einzelne) Behandlung zur Verfügung gestellt ist, so dass der Anwender der medizinischen, insbesondere dentalen Behandlungsvorrichtung nicht gezwungen ist, eine Behandlung zu unterbrechen, um den leeren Flüssigkeitsbehälter zu tauschen. Bei vollständiger Füllung des flexiblen Beutels nimmt der flexiblen Beutel vorzugsweise etwa 50 % bis etwa 80 %, besonders bevorzugt etwa 55 % bis etwa 70 % und insbesondere etwa 60 % bis etwa 65 % des Behälterinnenraums ein. Dem entsprechend ist das Volumen, welches das unter Druck stehenden Gas bei vollständiger Füllung des flexiblen Beutels im Behälterinnenraum einnimmt die Differenz auf 100%, d.h. von etwa 20 % bis etwa 50 %, vorzugsweise von etwa 30 % bis etwa 45 % und besonders bevorzugt von etwa 35 % bis etwa 40 %. Somit ist in vorteilhafter Weise sichergestellt, dass eine ausreichende Menge an Gas und ein ausreichender Druck zur Förderung der Flüssigkeit aus dem flexiblen Beutel vorhanden sind, insbesondere auch dann, wenn der flexiblen Beutel nur noch eine geringe Menge Flüssigkeit enthält. Die angeführten Volumina stellen vorzugsweise auch sicher, dass der Flüssigkeitsbehälter nicht zu groß ist, um die Handhabung der Behandlungsvorrichtung mit dem angeschlossenen Flüssigkeitsbehälter nicht zu behindern.

Das unter Druck stehende Gas, das in dem Behälterinnenraum, jedoch außerhalb des Beutelvolumens vorgesehen ist, umfasst vorzugweise ein nicht brennbares, möglichst umweltfreundliches und kostengünstiges Gas, zum Beispiel Luft, Stickstoff oder Kohlendioxid. Vorzugsweise beträgt der im Behälterinnenraum herrschende Druck bei vollständig gefülltem flexiblem Beutel zwischen etwa 7,0 bar bis 10,0 bar, vorzugsweise 7,5 bar bis 8,5 bar, insbesondere in etwa 8,0 bar. Wenn Flüssigkeit aus dem flexiblen Beutel gefördert wird verringert sich der Innendruck, jedoch sind die angegebenen Druckbereich derart gewählt, dass ein ausreichender Druck zur Förderung der Flüssigkeit aus dem flexiblen Beutel auch dann noch gegeben ist, wenn der flexiblen Beutel nur noch eine geringe Menge Flüssigkeit enthält, so dass in vorteilhafter Weise zumindest ein Großteil der Flüssigkeit aus dem flexiblen Beutel förderbar ist und/ oder nur eine geringe oder keine Restmenge an Flüssigkeit im flexiblen Beutel verbleibt.

Das Ventil mit dem Ventilrohr, das mit dem Beutelvolumen in Fluidverbindung steht, umfasst vorzugsweise ein Rückschlagventil oder eine Rückschlagklappe oder ähnliche Absperrarmaturen, wie sie dem Fachmann bekannt sind. Das Ventil umfasst insbesondere einen beweglichen Ventilkörper, der mit einem Federelement vorgespannt ist und/ oder auf den der Druck des im Behälterinnenraum aufgenommenen Gases wirkt. Das Ventil ist zwischen einer geschlossenen Position, in der die in dem Beutelvolumen aufgenommene Flüssigkeit nicht aus dem flexiblen Beutel entweichen kann, und einer geöffneten Position, in der die in dem Beutelvolumen aufgenommene Flüssigkeit durch das Ventilrohr aus dem flexiblen Beutel entweichen kann, schaltbar, wobei in der geöffneten Position der Druck, den das unter Druck stehende Gas auf den flexiblen Beutel ausübt, die Flüssigkeit aus dem flexiblen Beutel in das Ventilrohr treibt. Vorzugsweise ist in der geschlossenen Position der Ventilkörper durch das Federelement in einen Ventilsitz des Ventils gedrückt und/ oder eine Ventilöffnung, durch welche die Flüssigkeit fließen kann, ist durch ein Dichtelement abgedichtet, wodurch ein Entweichen der Flüssigkeit aus dem flexiblen Beutel nicht möglich ist. Vorzugsweise ist in der geöffneten Position der Ventilkörper entgegen der Kraft des Federelements vom Ventilsitz des Ventils entfernt und/ oder eine Ventilöffnung, durch welche die Flüssigkeit fließen kann, ist durch das Dichtelement nicht abgedichtet, wodurch die Flüssigkeit aus dem flexiblen Beutel fließen kann. Zur Bewegung des Ventilkörpers von der geschlossenen in die geöffnete Position muss die Kraft des Federelements und/ oder die auf den Ventilkörper wirkende Druckkraft des unter Druck stehenden Gases im Behälterinnenraum überwunden werden. Durch diese Merkmale ist eine zuverlässige Aufbewahrung der Flüssigkeit ohne ungewollten Flüssigkeitsverlust und eine gesicherte Förderung der Flüssigkeit aus dem flexiblen Beutel gewährleistet.

Ein Konnektor verbindet den Flüssigkeitsbehälter mit der medizinischen, insbesondere dentalen, Behandlungsvorrichtung derart, dass die Flüssigkeit aus dem flexiblen Beutel und durch das Ventilrohr in eine Fluid- oder Flüssigkeitsleitung der medizinischen, insbesondere dentalen, Behandlungsvorrichtung förderbar ist. Der Konnektor ist vorzugsweise an dem Flüssigkeitsbehälter befestigt und/ oder als Teil des Flüssigkeitsbehälters ausgebildet. Der Konnektor ist somit zur zuverlässigen, festen und lösbaren Verbindung des Flüssigkeitsbehälters mit der medizinischen, insbesondere dentalen, Behandlungsvorrichtung ausgebildet. Zusätzlich ist der Konnektor derart ausgebildet, dass er den Übergang der Flüssigkeit aus dem Flüssigkeitsbehälter in die Behandlungsvorrichtung unterstützt oder ermöglicht. Beispielsweise ist der Konnektor derart geformt und / oder ausgebildet, dass er den Vorgang des Verbindens des Flüssigkeitsbehälters, zum Beispiel des Ventils und/ oder Ventilrohrs, und der medizinischen, insbesondere dentalen, Behandlungsvorrichtung, zum Beispiel eines Ventils und/ oder einer Fluid- oder Flüssigkeitsleitung der Behandlungsvorrichtung, unterstützt. Beispielsweise ist der Konnektor derart geformt und / oder ausgebildet, dass er das Öffnen des Ventils des Flüssigkeitsbehälters unterstützt oder ermöglicht. Der Konnektor ist somit in vorteilhafterweise als multifunktionelles Bauteil ausgebildet.

Vorzugsweise umfasst der Konnektor einen Konnektorkörper, an dem ein erstes, Verbindungselement zum Verbinden des Konnektors mit dem Flüssigkeitsbehälter, insbesondere der Außenwand des Flüssigkeitsbehälters, und ein zweites Verbindungselement zum Verbinden mit der medizinischen, insbesondere dentalen, Behandlungsvorrichtung vorgesehen ist. Vorzugweise ist der Konnektor oder Konnektorkörper aus Kunststoff oder Metall gefertigt. Vorzugsweise sind das erste und zweite Verbindungselement an unterschiedlichen Seiten oder Positionen des Konnektorkörpers angeordnet. Vorzugsweise ist das erste Verbindungselement zum Verbinden des Konnektors mit der Außenwand des Flüssigkeitsbehälters an einer Innenseite des Konnektors angeordnet und/ oder derart positioniert, dass es sich in Richtung der Außenwand des Flüssigkeitsbehälters erstreckt. Vorzugsweise ist das zweite Verbindungselement zum Verbinden des Konnektors mit der medizinischen, insbesondere dentalen, Behandlungsvorrichtung an einer Außenseite des Konnektors angeordnet und/ oder derart positioniert, dass es sich vom Konnektorkörper weg und/ oder in Richtung der Behandlungsvorrichtung erstreckt. Diese Merkmale garantieren eine zuverlässige, stabile und lösbare Verbindung zwischen dem Flüssigkeitsbehälter und der Behandlungsvorrichtung.

Vorzugsweise ist das erste Verbindungselement als mechanisches, insbesondere formschlüssiges und/ oder kraftschlüssiges Verbindungselement ausgebildet, zum Beispiel als Gewinde, Rastverbindung, Bajonettverbindung und/ oder Presssitz. Vorzugsweise ist an dem Flüssigkeitsbehälter, insbesondere an dessen Außenwand, ein entsprechendes (erstes) Gegenverbindungselement vorgesehen, welches mit dem ersten Verbindungselement eine Verbindung eingeht, so dass der Konnektor fest, vorzugsweise für den Anwender schwer oder nicht lösbar, mit dem Flüssigkeitsbehälter, insbesondere mit dessen Außenwand, verbunden ist. Besonders bevorzugt umfasst die Verbindung eine Rastverbindung mit einer Rastnase, die zum Beispiel an dem Konnektorkörper vorgesehen ist, und einem Rücksprung oder einer Nut, die zum Beispiel an dem Flüssigkeitsbehälter vorgesehen ist, in welche die Rastnase eingreift. Der Rücksprung ist vorzugsweise an einem Ende des Flüssigkeitsbehälters und/ oder nahe der Öffnung der Außenwand für das Ventil vorgesehen. Vorzugsweise übergreift oder bedeckt ein Abschnitt des Konnektors zumindest einen Teil der Außenwand des Flüssigkeitsbehälters. Vorzugsweise umfasst der Konnektor einen Rücksprung in den ein Teil der Außenwand des Flüssigkeitsbehälters aufnehmbar ist. Vorzugsweise bildet der Konnektor einen schürzenartigen Fortsatz, der einen Teil der Außenwand des Flüssigkeitsbehälters umgibt und/ oder bedeckt und/ oder kontaktiert. Vorzugsweise ist an dem Rücksprung oder an dem schürzenartigen Fortsatz das erste Verbindungselement, zum Beispiel die Rastnase vorgesehen. Alternativ oder zusätzlich kann das erste Verbindungselement einen Klebstoff umfassen. Durch diese Merkmale ist eine zuverlässige Verbindung zwischen dem Flüssigkeitsbehälter und dem Konnektor gebildet.

Vorzugsweise ist das zweite Verbindungselement zum Verbinden mit der medizinischen, insbesondere dentalen, Behandlungsvorrichtung als mechanisches, insbesondere formschlüssiges und/ oder kraftschlüssiges Verbindungselement ausgebildet, zum Beispiel als Gewinde, Rastverbindung, Bajonettverbindung und/ oder Presssitz. Das zweite Verbindungselement kann alternativ oder zusätzlich auch als magnetisches Verbindungselement ausgebildet sein und insbesondere ein Magnetelement zur magnetischen Verbindung mit der Behandlungsvorrichtung aufweisen. Vorzugsweise ist an der medizinischen, insbesondere dentalen, Behandlungsvorrichtung, insbesondere an einer Anschlussvorrichtung zum lösbaren Anschließen des Flüssigkeitsbehälters, zum Beispiel an einer im Folgenden als dritte Anschlussvorrichtung bezeichneten Anschlussvorrichtung oder an einer im Folgenden detailliert beschriebenen fluidübertragende Schnittstelle, ein entsprechendes (zweites) Gegenverbindungselement vorgesehen, welches mit dem zweiten Verbindungselement eine Verbindung eingeht, so dass der Flüssigkeitsbehälter mit dem Konnektor zuverlässig und insbesondere flüssigkeitsdicht mit der medizinischen, insbesondere dentalen, Behandlungsvorrichtung verbunden ist. Vorzugsweise weist die (dritte) Anschlussvorrichtung eine Öffnung und eine, vorzugsweise zylindrische, Aufnahme auf, in welche der Flüssigkeitsbehälter, insbesondere ein Spül- und/ oder Kühlflüssigkeitsbehälter, einführbar ist. Das (zweite) Gegenverbindungselement ist insbesondere in der Aufnahme, vorzugsweise an einer Innenseite einer Wand der Aufnahme und/ oder sich in Richtung einer Mittelachse der Aufnahme erstreckend und/ oder an der fluidübertragenden Schnittstelle, angeordnet. Vorzugsweise ist das (zweite) Gegenverbindungselement als formschlüssiges und/ oder kraftschlüssiges Verbindungselement ausgebildet, zum Beispiel als Gewinde, Rastverbindung, Bajonettverbindung und/ oder Presssitz. Das (zweite) Gegenverbindungselement kann alternativ oder zusätzlich auch ein Magnetelement aufweisen, das derart angeordnet ist, dass eine magnetisch anziehende Verbindung zu dem Magnetelement des zweiten Verbindungselements gebildet ist. Durch diese Merkmale ist eine zuverlässige Verbindung zwischen dem Flüssigkeitsbehälter und der Behandlungsvorrichtung herstellbar.

Vorzugsweise ist an dem Konnektor oder Konnektorkörper kein Stellelement zum Stellen des Ventils des Flüssigkeitsbehälters zwischen der geschlossenen und der geöffneten Position vorgesehen, insbesondere kein mit einem Finger betätigbares Stellelement. Der Konnektor oder Konnektorkörper umfasst somit kein derartiges Stellelement, ein derartiges Stellelement ist auch nicht an dem Konnektor gelagert oder damit verbunden. Damit wird in vorteilhafter Weise die Herstellung des Konnektors einfacher und kostengünstiger und die Abmessungen des Konnektors verringern sich.

Vorzugsweise ist an dem Flüssigkeitsbehälter einschließlich des Konnektors kein Finger-Druckknopf oder Finger-Drehknopf zum Stellen des Ventils des Flüssigkeitsbehälters zwischen der geschlossenen und der geöffneten Position vorgesehen. Der Flüssigkeitsbehälter umfasst somit kein derartiges Stellelement, ein derartiges Stellelement ist auch nicht an dem Flüssigkeitsbehälter gelagert oder damit verbunden. Insbesondere ist somit ein gezieltes und/ oder genau dosiertes Fördern der Flüssigkeit aus dem Flüssigkeitsbehälter unmöglich, wenn der Flüssigkeitsbehälter nicht an die medizinische, insbesondere dentale, Behandlungsvorrichtung angeschlossen ist. Damit wird in vorteilhafter Weise eine ungewollte, manuelle Verwendung des Flüssigkeitsbehälters und damit gegebenenfalls eine inkorrekte Applikation der im Flüssigkeitsbehälter gefassten Flüssigkeit vermieden.

Vorzugsweise ist der Konnektor an jenem Ende des Flüssigkeitsbehälters angeordnet, an dem das Ventil des Flüssigkeitsbehälters vorgesehen ist. Besonders bevorzugt ist der Konnektor an der Grund- oder Deckfläche eines zylindrischen Flüssigkeitsbehälters vorgesehen. Damit wird in vorteilhafter Weise der Anschluss des Flüssigkeitsbehälters an die Behandlungsvorrichtung, insbesondere an (dritte) Anschlussvorrichtung erleichtert.

Vorzugsweise weist der Konnektorkörper einen Durchgang auf, in welchen sich das Ventil und/ oder Ventilrohr des Flüssigkeitsbehälters und/ oder (wenn der Flüssigkeitsbehälter an die Behandlungsvorrichtung angeschlossen ist) ein Ventil und/ oder eine Fluid- oder Flüssigkeitsleitung der medizinischen, insbesondere dentalen, Behandlungsvorrichtung erstreckt. Vorzugsweise weist der Durchgang eine Wand auf, die die Ventile, das Ventilrohr und/ oder die Flüssigkeitsleitung umgibt. Vorzugsweise ist die Wand des Durchgangs von den Ventilen, dem Ventilrohr und/ oder der Flüssigkeitsleitung beabstandet. Vorzugsweise bildet der Durchgang eine Führung für das Verbinden des Flüssigkeitsbehälters und der Behandlungsvorrichtung. Vorzugsweise ist/ sind der Durchgang und/ oder die Wand zylindrisch geformt. Vorzugsweise ist der Durchgang derart ausgebildet, dass das Ventil und/ oder Ventilrohr des Flüssigkeitsbehälters darin bewegbar ist, so dass das Ventil zwischen der geschlossenen und der geöffneten Position schaltbar ist. Vorzugsweise ist der Konnektor, insbesondere der Durchgang so ausgebildet, dass ein Teil eines Ventils oder eine Fluid- oder Flüssigkeitsleitung oder ein Stößel der Behandlungsvorrichtung das Ventilrohr des Flüssigkeitsbehälters kontaktieren kann, um das Ventil des Flüssigkeitsbehälters in die geöffnete Position zu bewegen. Durch diese Merkmale wird in vorteilhafter Weise das Anschließen des Flüssigkeitsbehälters für den Anwender erleichtert wird.

Vorzugsweise umfasst die im Flüssigkeitsbehälter, insbesondere im flexiblen Beutel gefasste Flüssigkeit Wasser, vorzugsweise steriles oder keimfreies Wasser, eine wässrige Lösung, zum Beispiel eine Kochsalzlösung, ein Anästhetikum, einen medizinischen Wirkstoff und/ oder eine Indikatorflüssigkeit. Vorzugsweise umfasst die im Flüssigkeitsbehälter gefasst Flüssigkeit eine Kühlflüssigkeit, zum Beispiel Wasser oder eine Kochsalzlösung, zur Kühlung der Behandlungsstelle und/ oder eines bewegten, zum Beispiel rotierenden oder vibrierenden, Werkzeugs. Vorzugsweise umfasst die im Flüssigkeitsbehälter gefasst Flüssigkeit eine Spülflüssigkeit, zum Beispiel Wasser oder eine Kochsalzlösung, zur Spülung der Behandlungsstelle. Damit ist es in vorteilhafter Weise möglich, medizinische, insbesondere dentale, Behandlungsvorrichtung, bei deren Einsatz eine Kühlung und/ oder Spülung der Behandlungsstelle und/ oder des Werkzeugs notwendig sind, kabellos auszubilden.

Die medizinische, insbesondere dentale, Behandlungsvorrichtung ist vorzugsweise als kabellose Behandlungsvorrichtung ohne Leitungsverbindung zu einer außerhalb des Außengehäuses angeordneten Energie- und Fluidquelle ausgebildet, insbesondere als kabellose Antriebs- und Versorgungseinheit für das Implantieren dentaler Implantate, so wie sie im Folgenden noch im Detail beschrieben ist. Es ist jedoch auch denkbar, medizinische, insbesondere dentale, Behandlungsvorrichtung die über eine Kabelverbindung mit einer externen, außerhalb des Außengehäuses angeordneten (elektrischen) Energie- und/ oder Gasquelle, jedoch nicht mit einer externen Flüssigkeits- oder Wasserquelle verbunden sind, mit einem derartigen Flüssigkeitsbehälter zu verbinden, um der Behandlungsvorrichtung Flüssigkeit für die Behandlung zur Verfügung zu stellen. Mit einem Flüssigkeitsbehälter verbundene Behandlungsvorrichtungen mit oder ohne Kabel könnte zum Beispiel auch für endodontische oder restaurative Anwendungen ausgebildet sein. Auch dentale Behandlungsvorrichtungen mit oder ohne Kabel für die Prophylaxe, zum Beispiel ein Pulverstrahlgerät, das einen Gasstrom mit einem abrasiven Pulver und eine Flüssigkeit abgibt, kann mit einem derartigen Flüssigkeitsbehälter, der insbesondere eine keimfreie oder sterile Flüssigkeit, zum Beispiel Wasser fasst, versehen sein.

Vorzugsweise ist im Außengehäuse der medizinischen, insbesondere dentalen, Behandlungsvorrichtung oder der mit einer Hand haltbare Antriebs- und Versorgungseinheit, beispielweise an der fluidübertragenden Schnittstelle, ein Stellelement vorgesehen das die Förderung der Flüssigkeit aus dem Flüssigkeitsbehälter, insbesondere dem flexiblen Beutel, und/ oder die Abgabe der Flüssigkeit zum Beispiel an die Fluid- oder Flüssigkeitsleitung und/ oder die Flüssigkeitsabgabevorrichtung der medizinischen, insbesondere dentalen, Behandlungsvorrichtung und/ oder an die Umgebung steuert. Das Stellelement umfasst vorzugsweise ein Ventil. Das Stellelement ist vorzugsweise als Teil der (dritten) Anschlussvorrichtung der Behandlungsvorrichtung oder anschließend an die (dritte) Anschlussvorrichtung ausgebildet. Durch das Vorsehen des Stellelements in der Behandlungsvorrichtung ist es nicht nötig ein Stellelement an dem Flüssigkeitsbehälter vorzusehen, wodurch in vorteilhafter Weise die Herstellung des Flüssigkeitsbehälters einfacher und kostengünstiger ist.

Das Stellelement oder Ventil ist vorzugsweise derart ausgebildet und/ oder angeordnet, dass es das Ventil des Flüssigkeitsbehälters von der geschlossenen Position in die geöffnete Position bewegen kann. Das Stellelement ist vorzugsweise derart ausgebildet und/ oder angeordnet, dass es in den Durchgang des Konnektorkörpers ragt. Das Stellelement ist vorzugsweise derart ausgebildet und/ oder angeordnet, dass es das Ventil des Flüssigkeitsbehälters und/ oder das Ventilrohr kontaktiert, insbesondere in dem oder durch den Durchgang. Das Stellelement der medizinischen, insbesondere dentalen, Behandlungsvorrichtung umfasst zum Stellen des Ventils des Flüssigkeitsbehälters zum Beispiel eine Fluid- oder Flüssigkeitsleitung oder einen Stößel, der am Stellelement vorgesehen ist. Durch diese Merkmale wird in vorteilhafter Weise sichergestellt, dass beim Anschluss des Flüssigkeitsbehälters an die Behandlungsvorrichtung, insbesondere an das Ventil der Behandlungsvorrichtung, gleichzeitig auch das Ventil des Flüssigkeitsbehälters in die geöffnete Position bewegt wird.

Der Anschluss des Flüssigkeitsbehälters an die Behandlungsvorrichtung, insbesondere an die fluidübertragende Schnittstelle, erfolgt zum Beispiel durch Einschieben oder Anstecken des Flüssigkeitsbehälters in bzw. an die (dritte) Anschlussvorrichtung. Durch den Kontakt des Ventilrohrs des Flüssigkeitsbehälters mit dem Stellelement der Behandlungsvorrichtung wird das Ventilrohr und der damit verbundenen Ventilkörper von der geschlossenen in die geöffnete Position bewegt, wobei die Kraft des Federelements und/ oder die auf den Ventilkörper wirkende Druckkraft des unter Druck stehenden Gases im Behälterinnenraum überwunden werden muss. Wird der Flüssigkeitsbehälter von der fluidübertragenden Schnittstelle gelöst und/ oder aus der Behandlungsvorrichtung entnommen, so wird der Kontakt des Ventilrohrs des Flüssigkeitsbehälters mit dem Stellelement der Behandlungsvorrichtung getrennt und das Federelement des Ventils des Flüssigkeitsbehälters bewegt das Ventilrohr und den Ventilkörper in die geschlossene Position. Somit nimmt das Ventil des Flüssigkeitsbehälters, wenn der Flüssigkeitsbehälter an die Behandlungsvorrichtung angeschlossen ist, kontinuierlich die geöffnete Position ein, wodurch in vorteilhafter Weise die Förderung der Flüssigkeit aus dem Flüssigkeitsbehälter ausschließlich durch das Ventil der Behandlungsvorrichtung gesteuert wird.

Vorzugsweise ist das Stellelement oder Ventil der medizinischen, insbesondere dentalen, Behandlungsvorrichtung durch die im Außengehäuse der Behandlungsvorrichtung angeordnete Steuervorrichtung und über eine an der medizinischen, insbesondere dentalen, Behandlungsvorrichtung vorgesehene Mensch-Maschine-Schnittstelle oder durch eine entfernt vom Außengehäuse angeordnete Schnittstelle, zum Beispiel durch eine Fußsteuerung, steuerbar.

Gemäß einem Ausführungsbeispiel ist die Verwendung eines in diesem Dokument beschriebenen Flüssigkeitsbehälters als Flüssigkeitsquelle einer, vorzugsweise kabellosen, medizinischen, insbesondere dentalen, Behandlungsvorrichtung vorgesehen. Wie im Vorstehenden beschrieben, kann die Behandlungsvorrichtung beispielsweise zur dentalen Implantation, für endodontische, prophylaktische und/ oder restaurative Anwendungen ausgebildet sein. Vorzugsweise umfasst die Behandlungsvorrichtung eine (dritte) Anschlussvorrichtung und/ oder eine fluidübertragende Schnittstelle zum Anschließen des Flüssigkeitsbehälters. Insbesondere ist der Flüssigkeitsbehälter die einzige Flüssigkeitsquelle der Behandlungsvorrichtung.

Gemäß einem Ausführungsbeispiel ist ein Verfahren zur Versorgung einer, vorzugsweise kabellosen, medizinischen, insbesondere dentalen, Behandlungsvorrichtung mit Flüssigkeit durch einen in diesem Dokument beschriebenen Flüssigkeitsbehälter als Flüssigkeitsquelle vorgesehen. Wie im Vorstehenden beschrieben, kann die Behandlungsvorrichtung beispielsweise zur dentalen Implantation, für endodontische, prophylaktische und/ oder restaurative Anwendungen ausgebildet sein. Vorzugsweise umfasst die Behandlungsvorrichtung eine (dritte) Anschlussvorrichtung und/ oder eine fluidübertragende Schnittstelle zum Anschließen des Flüssigkeitsbehälters. Insbesondere ist der Flüssigkeitsbehälter die einzige Flüssigkeitsquelle der Behandlungsvorrichtung.

Gemäß einem Ausführungsbeispiel umfasst die medizinische, insbesondere dentale Behandlungsvorrichtung eine mit einer Hand haltbare Antriebs- und Versorgungseinheit für das Implantieren dentaler Implantate. Die Behandlungsvorrichtung oder mit einer Hand haltbare Antriebs- und Versorgungseinheit umfasst ein Außengehäuse, welches die Antriebs- und Versorgungseinheit von der Umgebung abgrenzt. In dem Außengehäuse sind ein Elektromotor zum rotierenden Antrieb eines dentalen Werkzeugs und eine Steuervorrichtung zum Steuern der Antriebs- und Versorgungseinheit angeordnet. Am oder im Außengehäuse sind eine erste Anschlussvorrichtung, eine zweite Anschlussvorrichtung und eine dritte Anschlussvorrichtung vorgesehen, wobei diese erste, zweite und dritte Anschlussvorrichtung eigenständige, voneinander getrennte Anschlussvorrichtungen sind. Die erste Anschlussvorrichtung ist zum lösbaren Anschließen eines dentalen Hand- oder Winkelstücks an die Antriebs- und Versorgungseinheit, zum mechanischen Übertragen einer von dem Elektromotor erzeugten rotierenden Antriebsbewegung auf eine Welle in dem Hand- oder Winkelstück und das damit verbundene dentale Werkzeug und zum Leiten einer Flüssigkeit und/ oder eines Kühlfluids von der Antriebs- und Versorgungseinheit in das Hand- oder Winkelstück ausgebildet; die zweite Anschlussvorrichtung ist zum lösbaren Anschließen einer Batterie zur Versorgung des Elektromotors mit elektrischer Energie vorgesehen; und die dritte Anschlussvorrichtung ist zum lösbaren Anschließen eines Flüssigkeitsbehälters oder Kühlfluidbehälters ausgebildet. Die drei Anschlussvorrichtungen sind insbesondere an drei unterschiedlichen Stellen oder Positionen an oder in dem Außengehäuse angeordnet.

Mit der erfindungsgemäßen, mit einer Hand haltbaren Antriebs- und Versorgungseinheit für das Implantieren dentaler Implantate (im Folgenden auch verkürzt als Antriebs- und Versorgungseinheit bezeichnet) ist somit eine dentale Implantations-Vorrichtung geschaffen, bei der alle notwendigen Komponenten zum Betrieb und zur Durchführung einer dentalen Implantation, einschließlich Hand- oder Winkelstück, Batterie und Flüssigkeitsbehälter oder Behälter für oder mit Kühlfluid, mit einer, d.h. einer einzigen, Hand haltbar sind und/ oder im oder am Außengehäuse vorgesehen sind. Somit entfallen insbesondere alle sich außerhalb des Außengehäuses in die Umgebung erstreckenden Schlauch- und Leitungsverbindungen zu Energie- und Fluidquellen, wodurch die Handhabung der Implantations-Vorrichtung für den Anwender in vorteilhafter Weise erheblich erleichtert ist.

Mit der erfindungsgemäßen, mit einer Hand haltbaren Antriebs- und Versorgungseinheit für das Implantieren dentaler Implantate ist zusätzlich oder alternativ eine dentale Implantations-Vorrichtung geschaffen, bei der alle notwendigen Komponenten der dentalen Implantations-Vorrichtung einschließlich Hand- oder Winkelstück, Batterie und Flüssigkeitsbehälter oder Kühlfluidbehälter während der Implantation eines dentalen Implantats relativ zu dem Patienten, der das Implantat erhält, und/ oder relativ zu dem die Implantation durchführenden Arzt bewegbar sind, insbesondere gemeinsam bewegbar sind. Dadurch ist die Handhabung der Implantations-Vorrichtung für den Anwender in vorteilhafter Weise erheblich erleichtert, da bei Bewegungen der Hand des Arztes mit der Antriebs- und Versorgungseinheit keine durch Schlauch- oder Leitungsverbindungen verursachte Torsions- oder Zugkräfte auf die Hand des Arztes wirken.

Während der Verwendung der mit einer Hand haltbaren Antriebs- und Versorgungseinheit oder der dentalen Implantationsvorrichtung ist an alle drei Anschlussvorrichtungen die der jeweiligen Anschlussvorrichtung zugeordnete Komponente (Hand- oder Winkelstück; Batterie; Kühlfluidbehälter oder Flüssigkeitsbehälter) angeschlossen. Die Anordnung oder Positionierung der drei Anschlussvorrichtungen und somit der jeweiligen, damit verbundenen Komponente in oder an dem Außengehäuse ist somit in Bezug auf die Handhabbarkeit der Antriebs- und Versorgungseinheit, auf die Gewichtsverteilung, auf eine gute Sicht auf die Behandlungsstelle, auf die Bewegungsfreiheit während der Verwendung der Antriebs- und Versorgungseinheit und auf weitere anwendungstechnische Aspekte von äußerster Relevanz. Dazu wurde eine Vielzahl von Überlegungen, Studien und Tests mit Prototypen durchgeführt, um eine möglichst optimale Anordnung der drei Anschlussvorrichtungen und der jeweiligen, damit verbundenen Komponente in oder an dem Außengehäuse zu erreichen, insbesondere auch in Hinblick auf unterschiedliche Anatomien der Anwender, zum Beispiel Anwender mit kleinerem und/ oder zarterem Körperbau versus Anwender mit längeren und/ oder kräftigeren Gliedmaßen, insbesondere Armen und Händen. Die im gesamten Dokument beschriebenen Merkmale in Bezug auf die Anordnung oder Positionierung der drei Anschlussvorrichtungen sind Ergebnisse diese Überlegungen und Tests, mit dem Ziel einer möglichst vorteilhaften Gestaltung der mit einer Hand haltbaren Antriebs- und Versorgungseinheit für das Implantieren dentaler Implantate bzw. der dentalen Implantationsvorrichtung für alle Anwender, unabhängig von Körpergröße und Körperbau.

Vorzugsweise sind die erste Anschlussvorrichtung zum lösbaren Anschließen eines dentalen Hand- oder Winkelstücks und zumindest die zweite Anschlussvorrichtung oder die dritte Anschlussvorrichtung an unterschiedlichen und/ oder gegenüberliegenden Enden der Antriebs- und Versorgungseinheit angeordnet. Besonders bevorzugt ist die erste Anschlussvorrichtung an einem ersten Ende der Antriebs- und Versorgungseinheit und die zweite Anschlussvorrichtung zum lösbaren Anschließen einer Batterie an einem gegenüberliegenden zweiten Ende der Antriebs- und Versorgungseinheit angeordnet. Vorzugsweise sind die unterschiedlichen und/ oder gegenüberliegenden Enden entlang einer die Antriebs- und Versorgungseinheit durchsetzenden Längsachse angeordnet. Für die Handhabung der Antriebs- und Versorgungseinheit ist es vorteilhaft, wenn schwerere Komponenten, wie zum Beispiel das Hand- oder Winkelstück und die Batterie, zwecks Verteilung der Masse bzw. Masseausgleich an gegenüberliegenden Enden vorgesehen sind.

Vorzugsweise sind die erste Anschlussvorrichtung zum lösbaren Anschließen eines dentalen Hand- oder Winkelstücks und wahlweise die zweite Anschlussvorrichtung oder die dritte Anschlussvorrichtung, besonders bevorzugt die zweite Anschlussvorrichtung zum lösbaren Anschließen einer Batterie und/ oder eine damit verbundene Batterie, entlang der Längsachse der Antriebs- und Versorgungseinheit angeordnet. Für die Handhabung der Antriebs- und Versorgungseinheit ist es vorteilhaft, wenn schwerere Komponenten, wie zum Beispiel das Hand- oder Winkelstück und die Batterie, entlang einer Achse und insbesondere nahe der Hand oder dem Arm des Anwenders vorgesehen sind. Die Längsachse ist somit vorzugsweise als gemeinsame Längsachse der genannten Anschlussvorrichtungen und Komponenten ausgebildet. Die erste und die weitere, vorzugsweise die zweite, Anschlussvorrichtung, insbesondere auch das Hand- oder Winkelstück und die Batterie oder der Flüssigkeitsbehälter oder Kühlfluidbehälter, sind vorzugsweise fluchtend entlang der (gemeinsamen) Längsachse angeordnet. Alternativ sind die erste und die weitere, vorzugsweise die zweite, Anschlussvorrichtung, insbesondere auch das Hand- oder Winkelstück und die Batterie oder der Flüssigkeitsbehälter oder Kühlfluidbehälter, derart um die (gemeinsame) Längsachse angeordnet, dass sich die Längsachse zwischen diesen Bauteilen erstreckt. Vorzugsweise sind weitere, insbesondere schwerere, Komponenten der Antriebs- und Versorgungseinheit entlang der oder um die Längsachse angeordnet, zum Beispiel der Elektromotor und/ oder ein Getriebe. Durch diese Anordnung der Anschlussvorrichtungen, des Elektromotors und der Batterie, gegebenenfalls auch des Hand- oder Winkelstücks und des Getriebes, in Bezug auf die Längsachse der Antriebs- und Versorgungseinheit ist auch ein im Wesentlichen geradliniger Antriebsstrang gebildet, woraus konstruktive und montagetechnische Vorteile resultieren.

Vorzugsweise sind die erste Anschlussvorrichtung zum lösbaren Anschließen eines dentalen Hand- oder Winkelstücks und wahlweise die zweite Anschlussvorrichtung oder die dritte Anschlussvorrichtung, vorzugsweise die zweite Anschlussvorrichtung zum lösbaren Anschließen einer Batterie, in einer Schnittebene durch die Antriebs- und Versorgungseinheit angeordnet, die sich durch die gegenüberliegenden Enden der Antriebs- und Versorgungseinheit und durch eine Oberseite und Unterseite des Außengehäuses erstreckt. Für die Handhabung der Antriebs- und Versorgungseinheit ist es vorteilhaft, wenn schwerere Komponenten, wie zum Beispiel das Hand- oder Winkelstück und die Batterie, in einer Ebene, i.e. der Schnittebene, und insbesondere nahe der Hand oder dem Arm des Anwenders vorgesehen sind. Die jeweiligen Mittelachsen der ersten Anschlussvorrichtung und der zweiten oder dritten Anschlussvorrichtung und/ oder die Mittelachse der Antriebs- und Versorgungseinheit sind vorzugsweise in der Schnittebene angeordnet oder erstrecken sich darin, wodurch eine vorteilhafte Massenverteilung erreicht wird, insbesondere wenn das Hand- oder Winkelstück und die Batterie oder der Flüssigkeitsbehälter oder Kühlfluidbehälter mit der jeweiligen Anschlussvorrichtung verbunden ist. Vorzugsweise sind weitere, insbesondere schwerere, Komponenten der Antriebs- und Versorgungseinheit in der Schnittebene angeordnet, zum Beispiel der Elektromotor und/ oder ein Getriebe. Durch die Anordnung des Elektromotors und der Batterie, gegebenenfalls auch des Getriebes, und der Anschlussvorrichtrungen in der Schnittebene der Antriebs- und Versorgungseinheit ist innerhalb der Antriebs- und Versorgungseinheit ein Antriebsstrang oder Antriebspaket gebildet, woraus konstruktive und montagetechnische Vorteile resultieren.

Vorzugsweise ist die andere Anschlussvorrichtung der zweiten oder dritten Anschlussvorrichtung, vorzugsweise die dritte Anschlussvorrichtung zum lösbaren Anschließen eines Flüssigkeitsbehälters oder Kühlfluidbehälters, versetzt zu und/ oder außerhalb der Schnittebene angeordnet. Besonders bevorzugt ist die andere Anschlussvorrichtung, insbesondere die dritte Anschlussvorrichtung und/ oder ein damit verbundener Flüssigkeitsbehälter oder Kühlfluidbehälter, seitlich und/ oder seitlich versetzt zu und/ oder neben der Schnittebene angeordnet. Besonders bevorzugt ist die andere Anschlussvorrichtung, insbesondere die dritte Anschlussvorrichtung und/ oder ein damit verbundener Flüssigkeitsbehälter oder Kühlfluidbehälter, versetzt und/ oder seitlich versetzt zu und/ oder neben den beiden übrigen Anschlussvorrichtungen, vorzugsweise der ersten und zweiten Anschlussvorrichtung, angeordnet. Diese versetzte oder seitliche Anordnung einer der Anschlussvorrichtungen relativ zu den anderen beiden Anschlussvorrichtungen ermöglicht es in vorteilhafter Weise eine kompakte, insbesondere nicht zu lange Antriebs- und Versorgungseinheit und/ oder dentale Implantationsvorrichtung zu schaffen.

Vorzugsweise ist die andere Anschlussvorrichtung der zweiten oder dritten Anschlussvorrichtung, insbesondere die dritte Anschlussvorrichtung zum lösbaren Anschließen eines Flüssigkeitsbehälters oder Kühlfluidbehälters und/ oder ein damit verbundener Flüssigkeitsbehälter oder Kühlfluidbehälter, versetzt zu der Längsachse der Antriebs- und Versorgungseinheit angeordnet. Besonders bevorzugt ist die andere Anschlussvorrichtung, insbesondere die dritte Anschlussvorrichtung und/ oder ein damit verbundener Flüssigkeitsbehälter oder Kühlfluidbehälter, seitlich und/ oder seitlich versetzt zu und/ oder neben der Längsachse angeordnet. Diese versetzte oder seitliche Anordnung einer der Anschlussvorrichtungen relativ zu den anderen beiden Anschlussvorrichtungen ermöglicht es in vorteilhafter Weise eine kompakte, insbesondere nicht zu lange Antriebs- und Versorgungseinheit und/ oder dentale Implantationsvorrichtung zu schaffen.

Vorzugsweise ist die versetzt zu und/ oder außerhalb der Schnittebene angeordnete zweite oder dritte Anschlussvorrichtung, insbesondere die dritte Anschlussvorrichtung zum lösbaren Anschließen eines Flüssigkeitsbehälters oder Kühlfluidbehälters und/ oder ein damit verbundener Flüssigkeitsbehälter oder Kühlfluidbehälter, zwischen den beiden in der Schnittebene angeordneten Anschlussvorrichtung vorgesehen. Zusätzlich oder alternativ ist die versetzt oder seitlich zu der Schnittebene angeordnete zweite oder dritte Anschlussvorrichtung, insbesondere die dritte Anschlussvorrichtung zum lösbaren Anschließen eines Flüssigkeitsbehälters oder Kühlfluidbehälters, in Bezug auf die Längsachse zwischen den beiden in der Schnittebene angeordneten Anschlussvorrichtung vorgesehen. Besonders bevorzugt ist die zweite oder dritte Anschlussvorrichtung, insbesondere die dritte Anschlussvorrichtung, in Bezug auf die erste Anschlussvorrichtung zum lösbaren Anschließen eines dentalen Hand- oder Winkelstücks rückversetzt oder in Richtung der anderen, vorzugsweise der zweiten, Anschlussvorrichtung versetzt angeordnet. Unter anderem durch diese Merkmale ist, vorzugsweise an einer Endfläche der Außenhülse, ein Freiraum gebildet, der an einer ersten Seite durch die vorstehende, und vorzugsweise seitlich versetzte, erste Anschlussvorrichtung und an einer weiteren, zweiten Seite durch die zweite oder dritte Anschlussvorrichtung, insbesondere die dritte Anschlussvorrichtung, begrenzt ist. In diesem Freiraum findet während der sachgerechten Verwendung der Antriebs- und Versorgungseinheit ein Teil der Hand des Anwenders Platz, vorzugsweise kann die Antriebs- und Versorgungseinheit bzw. die dentale Implantationsvorrichtung auf einem Teil der in dem Freiraum aufgenommenen Hand, zum Beispiel dem Handrücken und/ oder dem Handgelenk, gelagert werden, wodurch in vorteilhafter Weise die Handhabung und Ergonomie der Antriebs- und Versorgungseinheit noch weiter verbessert ist.

Vorzugsweise erstreckt sich durch die Antriebs- und Versorgungseinheit eine Mittelebene, wobei die erste Anschlussvorrichtung auf einer ersten Seite der Mittelebene und die zweite und dritte Anschlussvorrichtung auf einer anderen, zweiten Seite der Mittelebene angeordnet sind. Vorzugsweise ist die Mittelebene rechtwinkelig oder im Wesentlichen im rechten Winkel zur Schnittebene angeordnet. Durch diese Merkmale ist in vorteilhafter Weise eine ungehinderte Sicht des Anwenders auf die erste Anschlussvorrichtung und ein damit verbundenes Hand- oder Winkelstück und die Behandlungsstelle sichergestellt.

Vorzugsweise ist der Elektromotor und gegebenenfalls ein Getriebe anschließend an die erste Anschlussvorrichtung und/ oder fluchtend mit der ersten Anschlussvorrichtung angeordnet. Das Getriebe ist insbesondere zum Ändern der Drehzahl und/ oder des Drehmoments der vom Elektromotor erzeugten Rotationsbewegung vorgesehen. Vorzugsweise weisen die erste Anschlussvorrichtung und der Elektromotor und gegebenenfalls das Getriebe eine gemeinsame Mittelachse auf, um und/ oder entlang der sie angeordnet sind. Diese Merkmale erbringen konstruktive, zum Beispiel platzsparende, und montagetechnische Vorteile.

Vorzugsweise ist der Elektromotor mit der ersten Anschlussvorrichtung und gegebenenfalls das Getriebe auf der ersten Seite der Mittelebene angeordnet. Insbesondere ist der Elektromotor und gegebenenfalls das Getriebe derart in Bezug auf die zweite Anschlussvorrichtung und/ oder eine an die zweiten Anschlussvorrichtung angeschlossene Batterie und/ oder die dritte Anschlussvorrichtung und/ oder einen mit der dritten Anschlussvorrichtung verbundenen Flüssigkeitsbehälter oder Kühlfluidbehälter angeordnet, dass sich die Mittelebene zwischen dem Elektromotor auf der ersten Seite der Mittelebene und der zweiten Anschlussvorrichtung und/ oder der an die zweite Anschlussvorrichtung angeschlossenen Batterie und/ oder der dritten Anschlussvorrichtung und/ oder einem mit der dritten Anschlussvorrichtung verbundenen Flüssigkeitsbehälter oder Kühlfluidbehälter auf der zweiten Seite der Mittelebene erstreckt. Die zweite und dritte Anschlussvorrichtung befinden sich somit insbesondere auf der zweiten Seite der Mittelebene. Durch diese Merkmale ist in vorteilhafter Weise eine ungehinderte Sicht des Anwenders auf die erste Anschlussvorrichtung und ein damit verbundenes Hand- oder Winkelstück und die Behandlungsstelle sichergestellt.

Vorzugsweise umfasst die Steuervorrichtung zum Steuern der Antriebs- und Versorgungseinheit eine Platine, die zwischen dem Elektromotor und der zweiten Anschlussvorrichtung, insbesondere einer Aufnahme der zweiten Anschlussvorrichtung, und/ oder einer mit der zweiten Anschlussvorrichtung verbundenen Batterie angeordnet ist. Vorzugsweise weist die Platine mehrere Abschnitte auf, die gewinkelt mit einem Winkel ungleich 0° zueinander angeordnet sind, wobei zumindest ein Abschnitt zwischen dem Elektromotor und der zweiten Anschlussvorrichtung und/ oder einer mit der zweiten Anschlussvorrichtung verbundenen Batterie angeordnet ist. Besonders bevorzugt ist die Platine oder zumindest ein Abschnitt davon parallel zur Mittelebene angeordnet und/ oder erstreckt sich in der Mittelebene. Diese Merkmale bewirken eine platzsparende Anordnung der Steuervorrichtung, insbesondere der Platine, im Außengehäuse der Antriebs- und Versorgungseinheit.

Vorzugsweise weist die zweite Anschlussvorrichtung eine Öffnung und eine, vorzugsweise zylindrische, Aufnahme auf, in welche die Batterie einführbar ist. Vorzugsweise ist die Öffnung an dem zweiten Ende oder einer zweiten Endfläche des Außengehäuses angeordnet. Vorzugsweise ist die Öffnung und/ oder Aufnahme in der Schnittebene angeordnet und/ oder durchsetzt die Schnittebene die Öffnung und/ oder Aufnahme. Vorzugsweise ist die Aufnahme derart bemessen, dass sie zumindest einen Teil der Batterie oder die gesamte Batterie umschließt. Vorzugsweise ist am Ende der Öffnung ein Verschluss, zum Beispiel ein Deckel, vorgesehen, der die Öffnung verschließt. Vorzugsweise sind in der Aufnahme, insbesondere gegenüber der Öffnung, elektrische Kontakte vorgesehen zur elektrischen Verbindung mit und/ oder Übertragung elektrischer Energie von der Batterie an die Antriebs- und Versorgungseinheit, insbesondere den Elektromotor. Diese Merkmale garantieren in vorteilhafter Weise eine zuverlässige und sichere Energieversorgung der Antriebs- und Versorgungseinheit.

Vorzugsweise weist die dritte Anschlussvorrichtung eine Öffnung und eine, vorzugsweise zylindrische, Aufnahme auf, in welche der Flüssigkeitsbehälter oder Kühlfluidbehälter einführbar ist. Die Öffnung kann an dem zweiten Ende oder der zweiten Endfläche des Außengehäuses angeordnet sein. Alternativ ist die Öffnung der dritten Anschlussvorrichtung, so wie im Vorstehenden für die dritte Anschlussvorrichtung beschrieben, zwischen der ersten und zweiten Anschlussvorrichtung und/ oder seitlich versetzt zu der Längsachse oder Schnittebene und/ oder außerhalb der Schnittebene angeordnet. Vorzugsweise ist die Aufnahme derart bemessen, dass sie zumindest einen Teil des Flüssigkeitsbehälters oder Kühlfluidbehälters oder den gesamten Flüssigkeitsbehälter oder Kühlfluidbehälter umschließt. Vorzugsweise umfasst die dritte Anschlussvorrichtung eine fluidübertragende Schnittstelle zur Verbindung mit einem Flüssigkeitsbehälter oder Kühlfluidbehälter, über die Flüssigkeit von dem Flüssigkeitsbehälter oder Kühlfluid von dem Kühlfluidbehälter in die Antriebs- und Versorgungseinheit übertragbar ist. Besonders bevorzugt ist die fluidübertragende Schnittstelle gegenüber der Öffnung der dritten Anschlussvorrichtung vorgesehen. Diese Merkmale garantieren in vorteilhafter Weise eine zuverlässige und sichere Leitung der Flüssigkeit oder des Kühlfluids in die Antriebs- und Versorgungseinheit.

Besonders bevorzugt umfasst die fluidübertragende Schnittstelle zumindest eine Flüssigkeits- oder Fluidleitung, die sich von der dritten Anschlussvorrichtung, insbesondere von der fluidübertragenden Schnittstelle, zur ersten Anschlussvorrichtung erstreckt und über die Flüssigkeit oder Kühlfluid von dem mit der dritten Anschlussvorrichtung verbundenen Flüssigkeitsbehälter oder Kühlfluidbehälter an das an die erste Anschlussvorrichtung angeschlossene Hand- oder Winkelstück übertragbar ist. Die Flüssigkeits- oder Fluidleitung erstreckt sich vorzugsweise vollständig und/ oder über ihre gesamte Länge innerhalb der Antriebs- und Versorgungseinheit und / oder des Außengehäuses. Diese Merkmale, insbesondere das Vorsehen der Flüssigkeits- oder Fluidleitung in dem Außengehäuse, erleichtern in vorteilhafter Weise die Handhabung der Antriebs- und Versorgungseinheit und/ oder der dentalen Implantationsvorrichtung, da der Anwender nicht auf außerhalb der Antriebs- und Versorgungseinheit verlaufende Flüssigkeits- oder Fluidleitungen achten muss.

Vorzugsweise weist die die erste Anschlussvorrichtung einen Kupplungszapfen oder ein Kupplungsrohr auf, auf den das Hand- oder Winkelstück fluid- und Antriebskraft übertragend aufsteckbar ist. Vorzugsweise ist der Kupplungszapfen oder das Kupplungsrohr an dem ersten Ende oder der ersten Endfläche des Außengehäuses angeordnet. Vorzugsweise ist der Kupplungszapfen oder das Kupplungsrohr in der Schnittebene angeordnet und/ oder durchsetzt die Schnittebene den Kupplungszapfen oder das Kupplungsrohr. Vorzugsweise ist der Kupplungszapfen oder das Kupplungsrohr hohl ausgebildet, so dass sich eine Welle des Hand- oder Winkelstücks und/ oder des Elektromotors in den Kupplungszapfen oder das Kupplungsrohr erstreckt, um eine vom Elektromotor erzeugte Drehbewegung und/ oder Drehmoment auf das Hand- oder Winkelstück und ein damit verbindbares dentalen Werkzeug zu übertragen. Vorzugsweise ist an dem Kupplungszapfen oder Kupplungsrohr eine weitere fluidübertragende Schnittstelle zum Übertragen der Flüssigkeit oder des Kühlfluids von der Antriebs- und Versorgungseinheit auf das Hand- oder Winkelstück vorgesehen. Die fluidübertragende Schnittstelle ist insbesondere fluidübertragend mit der Flüssigkeits- oder Fluidleitung verbunden. Die fluidübertragende Schnittstelle umfasst zum Beispiel eine Bohrung in dem Kupplungszapfen oder Kupplungsrohr. Diese Merkmale ermöglichen in vorteilhafter Weise eine zuverlässige Verbindung des Hand- oder Winkelstücks mit der Antriebs- und Versorgungseinheit und eine zuverlässige Weiterleitung der Flüssigkeit oder des Kühlfluids und der Drehbewegung und/ oder des Drehmoments.

Die Batterie kann wahlweise als nicht wiederaufladbare Primärbatterie oder in Bezug auf die Auswirkungen auf die Umwelt vorteilhafterweise als wiederholt aufladbarer Akkumulator ausgebildet sein. Zum Laden des Akkumulators ist dieser vorzugsweise von der Antriebs- und Versorgungseinheit, insbesondere der zweiten Anschlussvorrichtung, lösbar und mit einem von der Antriebs- und Versorgungseinheit getrennten, eigenständigen Ladegerät verbindbar. Alternativ ist es auch möglich, dass die Antriebs- und Versorgungseinheit Ladekontakte aufweist, die an ein Ladegerät und/ oder an ein Versorgungsnetz für elektrische Energie anschließbar sind, so dass der Akkumulator in vorteilhafter Weise zum Laden nicht von der Antriebs- und Versorgungseinheit gelöst werden muss.

Alle drei Anschlussvorrichtungen sind vorzugsweise als lösbare Anschlussvorrichtungen ausgebildet, so dass die der jeweiligen Anschlussvorrichtung zugeordnete Komponente (Hand- oder Winkelstück; Batterie; Flüssigkeitsbehälter oder Kühlfluidbehälter) von der Anschlussvorrichtung lösbar und/ oder austauschbar ist. Zumindest eine der Anschlussvorrichtungen ist zum Beispiel als Steckverbindung, Schraubverbindung, Bajonettverbindung oder ähnliche lösbare Verbindung ausgebildet, wodurch dem Anwender in vorteilhafter Weise ein einfaches und rasches Anschließen, Lösen und/ oder Austauschen der jeweiligen Komponente ermöglicht wird.

Aus dem Vorstehenden ist zu erkennen, dass alle drei Anschlussvorrichtungen in oder an dem Außengehäuse zusammengefasst sind. Das Außengehäuse ist vorzugsweise als gemeinsames Außengehäuse für alle drei Anschlussvorrichtungen ausgebildet. Insbesondere verbindet und/ oder umfasst und/ oder integriert das Außengehäuse die drei Anschlussvorrichtungen, so dass die Antriebs- und Versorgungseinheit für das Implantieren dentaler Implantate eine kompakte Einheit bildet, die gut in der Hand liegt und einfach zu handhaben ist.

Eine dentale Implantationsvorrichtung umfasst eine mit einer Hand haltbare Antriebs- und Versorgungseinheit wie sie im Vorstehenden und im gesamten Dokument beschrieben ist, sowie ein Hand- oder Winkelstück, eine Batterie und einen Flüssigkeitsbehälter oder Kühlfluidbehälter. Vorzugsweise ist das Hand- oder Winkelstück, die Batterie lösbar mit der zweiten Anschlussvorrichtung und der Flüssigkeitsbehälter oder Kühlfluidbehälter lösbar mit der dritten Anschlussvorrichtung verbindbar.

Die Erfindung wird nachfolgend anhand bevorzugter Ausführungsbeispiele und Bezug nehmend auf die beigefügten Zeichnungen erläutert. Es zeigt die
Figur 1 ein Ausführungsbeispiel einer mit einer Hand haltbaren Antriebs- und Versorgungseinheit für das Implantieren dentaler Implantate mit Blick auf eine Vorderseite oder erste Endfläche der Antriebs- und Versorgungseinheit, an der die erste Anschlussvorrichtung zum lösbaren Anschließen eines dentalen Hand- oder Winkelstücks vorgesehen ist;
Figur 2 die Rückseite oder zweite Endfläche der Antriebs- und Versorgungseinheit der Figur 1, die zweite Anschlussvorrichtung zum lösbaren Anschließen einer Batterie und die dritte Anschlussvorrichtung zum lösbaren Anschließen eines Flüssigkeits- oder Kühlfluidbehälters;
Figur 3 die Antriebs- und Versorgungseinheit der Figur 1 mit angeschlossenem Hand- oder Winkelstück und Flüssigkeits- oder Kühlfluidbehälter;
Figur 4 die Antriebs- und Versorgungseinheit der Figur 1 mit angeschlossener Batterie und angeschlossenem Flüssigkeits- oder Kühlfluidbehälter;
Figur 5 eine Schnittdarstellung der Antriebs- und Versorgungseinheit der Figur 1;
Figur 6 die Antriebs- und Versorgungseinheit der Figur 1 in einer teiltransparenten Darstellung;
Figur 7 ein Ausführungsbeispiel einer mit einer Hand haltbaren Antriebs- und Versorgungseinheit für das Implantieren dentaler Implantate mit einer jeweils durch einen Verschluss verschließbaren zweiten Anschlussvorrichtung zum lösbaren Anschließen einer Batterie und dritten Anschlussvorrichtung zum lösbaren Anschließen eines Flüssigkeits- oder Kühlfluidbehälters;
Figur 8 in einer Schnittansicht ein Ausführungsbeispiel eines Flüssigkeitsbehälters, der an eine medizinische, insbesondere dentale, Behandlungsvorrichtung anschließbar ist, mit einem ungefüllten flexiblen Beutel;
Figur 9 in einer Schnittansicht den Flüssigkeitsbehälter der Figur 8 mit gefülltem flexiblem Beutel;
Figur 10 in einer Schnittansicht ein Ausführungsbeispiel eines Ventils eines Flüssigkeitsbehälters, der an eine medizinische, insbesondere dentale, Behandlungsvorrichtung anschließbar ist;
Figur 11 ein erstes Ausführungsbeispiel eines Flüssigkeitsbehälters mit einem Konnektor, der den Flüssigkeitsbehälter mit einer medizinischen, insbesondere dentalen, Behandlungsvorrichtung derart verbindet, dass Flüssigkeit aus dem flexiblen Beutel förderbar ist;
Figur 12 ein zweites Ausführungsbeispiel eines Flüssigkeitsbehälters mit einem Konnektor, der den Flüssigkeitsbehälter mit einer medizinischen, insbesondere dentalen, Behandlungsvorrichtung derart verbindet, dass Flüssigkeit aus dem flexiblen Beutel förderbar ist;
Figur 13 in einer Schnittansicht ein drittes Ausführungsbeispiel eines Flüssigkeitsbehälters mit einem Konnektor, der den Flüssigkeitsbehälter mit einer medizinischen, insbesondere dentalen, Behandlungsvorrichtung derart verbindet, dass Flüssigkeit aus dem flexiblen Beutel förderbar ist;
Figur 14 in einer Schnittansicht einen Flüssigkeitsbehälter mit einem Konnektor, der in einer (dritten) Anschlussvorrichtung einer medizinischen, insbesondere dentalen, Behandlungsvorrichtung aufgenommen und mit einem Ventil und einer Flüssigkeitsleitung der medizinischen, insbesondere dentalen, Behandlungsvorrichtung verbunden ist;
Figur 15 den Flüssigkeitsbehälter, den Konnektor, das Ventil und die Flüssigkeitsleitung der Figur 14 in Aufsicht;
Figur 16 ein Ausführungsbeispiel einer medizinischen, insbesondere dentalen Behandlungsvorrichtung, bei der die Flüssigkeit über eine Flüssigkeitsleitung, die zumindest teilweise außerhalb des Außengehäuses angeordnet ist, vom Flüssigkeitsbehälter zur Flüssigkeitsabgabevorrichtung gefördert wird;
Figur 17 ein Ausführungsbeispiel einer medizinischen, insbesondere dentalen Behandlungsvorrichtung, bei der die Flüssigkeit über eine Flüssigkeitsleitung, die innerhalb des Außengehäuses angeordnet ist, vom Flüssigkeitsbehälter zur Flüssigkeitsabgabevorrichtung gefördert wird;
Figur 18 ein Ausführungsbeispiel einer medizinischen, endodontischen Behandlungsvorrichtung, die mit Flüssigkeit aus einem Flüssigkeitsbehälter mit einem flexiblen Beutel versorgbar ist.

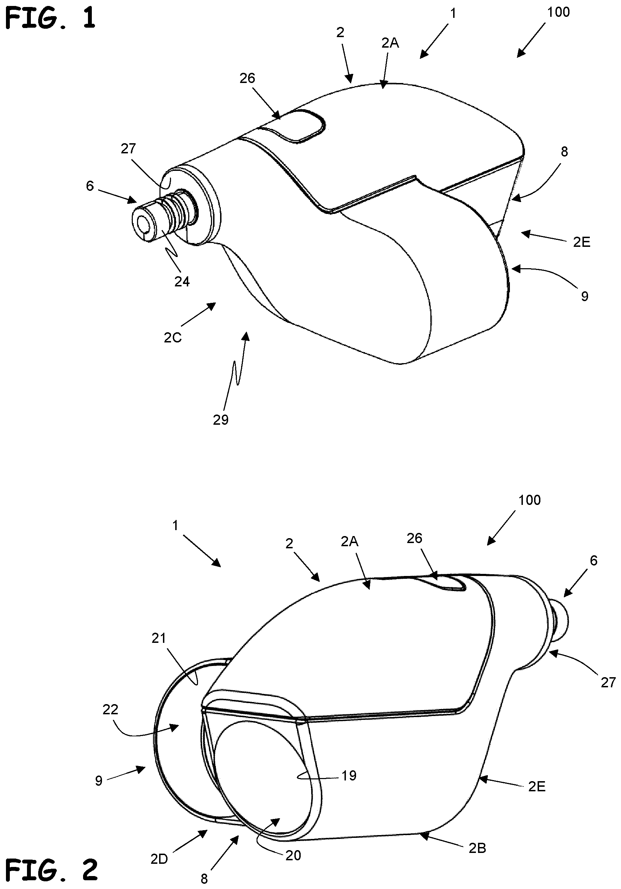

Die in den Figuren 1 - 7 dargestellte medizinische, insbesondere dentale Behandlungsvorrichtung 100, 25, die zum Beispiel eine mit einer Hand haltbaren Antriebs- und Versorgungseinheit 1 für das Implantieren dentaler Implantate umfasst, weist ein Außengehäuse 2 auf, welches die Antriebs- und Versorgungseinheit 1 von der Umgebung abgrenzt. Das Außengehäuse 2 weist mehrere Seiten oder Flächen auf: eine Oberseite 2A, die bei korrektem Halten der Antriebs- und Versorgungseinheit 1, zum Beispiel während dem Setzen eines Implantats, das obere Ende der Antriebs- und Versorgungseinheit 1 bildet. Auf der Oberseite 2A kann vorzugsweise eine Mensch-Maschine-Schnittstelle 26 vorgesehen sein, zum Beispiel ein Bedienelement, ein Stellelement oder eine Anzeige. Der Oberseite 2A gegenüber ist eine Unterseite 2B angeordnet. Die Unterseite 2B bildet bei korrektem Halten der Antriebs- und Versorgungseinheit 1, zum Beispiel während des Implantierens, das untere Ende der Antriebs- und Versorgungseinheit 1. Eine erste Endfläche oder erstes Ende 2C bildet eine Seitenwand des Außengehäuses 2 und verbindet somit die Oberseite 2A mit der Unterseite 2B. An dem ersten Ende 2C ist insbesondere eine erste Anschlussvorrichtung 6 vorgesehen. Eine zweite Endfläche oder zweites Ende 2D bildet eine weitere Seitenwand des Außengehäuses 2 und verbindet somit ebenfalls die Oberseite 2A mit der Unterseite 2B. An der zweiten Endfläche 2D ist vorzugsweise zumindest eine weitere Anschlussvorrichtung, zum Beispiel eine zweite Anschlussvorrichtung 8 oder dritte Anschlussvorrichtung 9, vorgesehen. Vorzugsweise liegen die erste Endfläche 2C und die zweite Endfläche 2D einander gegenüber. An den weiteren Seiten der Antriebs- und Versorgungseinheit 1, insbesondere der Außenhülse 2, sind weitere Seitenflächen 2E vorgesehen, die sowohl die Oberseite 2A mit der Unterseite 2B als auch die erste Endfläche 2C und die zweite Endfläche 2D miteinander verbinden.

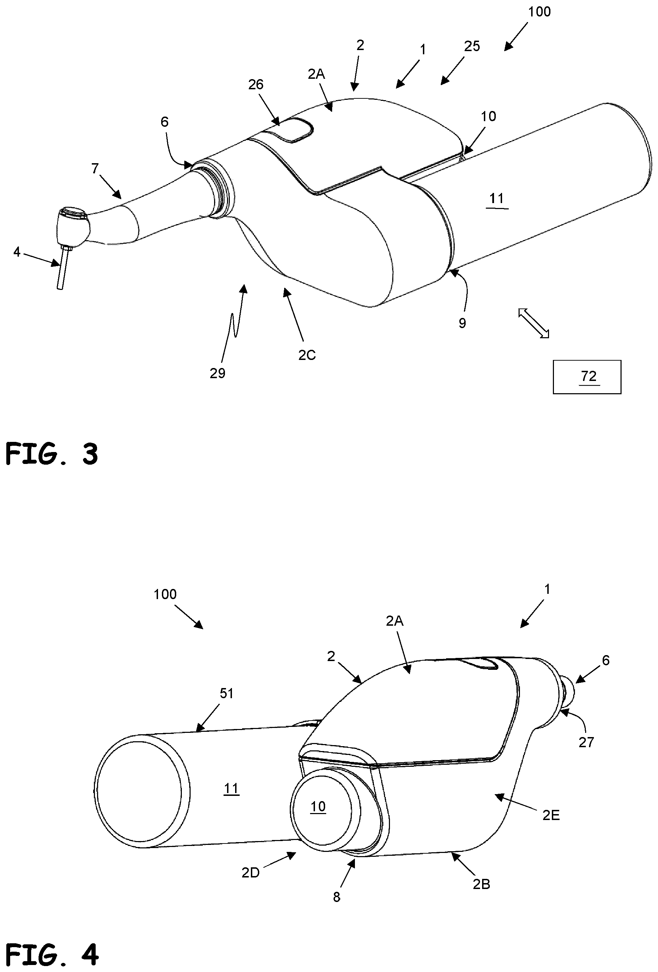

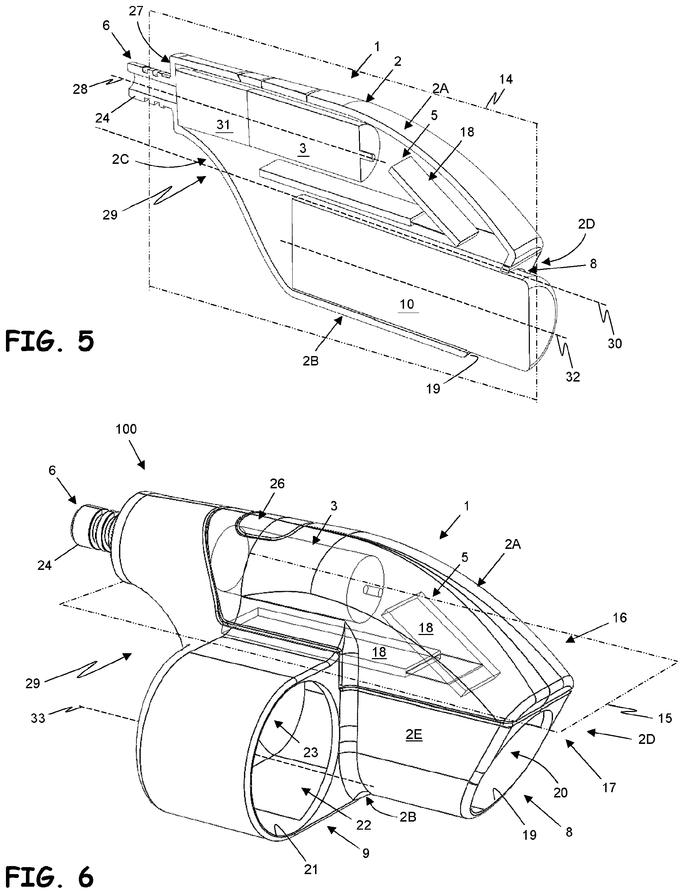

Die am Außengehäuse 2, insbesondere an der ersten Endfläche 2C, angeordnete erste Anschlussvorrichtung 6 ist zum lösbaren Anschließen eines dentalen Hand- oder Winkelstücks 7 (siehe Figur 3) an die Antriebs- und Versorgungseinheit 1, zum mechanischen Übertragen einer von einem Elektromotor 3 (siehe Figuren 5 und 6) erzeugten rotierenden Antriebsbewegung auf eine Welle in dem Hand- oder Winkelstück 7 und zum Leiten einer Flüssigkeit oder eines Kühlfluids von der Antriebs- und Versorgungseinheit 1 in das Hand- oder Winkelstück 7 vorgesehen. Die erste Anschlussvorrichtung 6 weist einen Kupplungszapfen 24 auf, auf den das Hand- oder Winkelstück 7 fluid- und Antriebskraft übertragend aufsteckbar ist.

Der Kupplungszapfen 24 ist rotationssymmetrisch und/ oder zylindrisch geformt. Vorzugsweise ist das Hand- oder Winkelstück 7 drehbar an dem Kupplungszapfen 24 befestigt, so dass, das Hand- oder Winkelstück 7 zur besseren Handhabung relativ zu der Antriebs- und Versorgungseinheit 1 während einer dentalen Behandlung gedreht werden kann.

Der Kupplungszapfen 24 ist zur Aufnahme einer Welle, welche den Elektromotor mit einer Welle im Hand- oder Winkelstück 7 und einem dentalen Werkzeug 4 verbindet, hohl ausgebildet. Der Kupplungszapfen 24 umfasst zumindest eine Bohrung, durch welche eine Flüssigkeit oder ein Kühlfluid von der Antriebs- und Versorgungseinheit 1 in das Hand- oder Winkelstück 7 übertragbar ist.

Der Kupplungszapfen 24 erstreckt sich, insbesondere geradlinig, von der ersten Endfläche 2C, vorzugsweise von einer Kupplungsfläche 27, entlang einer Kupplungszapfen-Mittelachse 28. Die Kupplungsfläche 27 ist vorzugsweise kreisrund ausgebildet. Der Kupplungszapfen 24 und insbesondere die Kupplungsfläche 27 sind nahe einer Seitenflächen 2E angeordnet. Der Kupplungszapfen 24 und die Kupplungsfläche 27 sind somit nicht mittig, sondern versetzt zur Mitte der Endfläche 2C angeordnet. Die Kupplungsfläche 27, insbesondere deren Umfangskante, grenzen vorzugsweise unmittelbar an eine Seitenfläche 2E, siehe Figuren 2 und 4. Unter anderem durch diese seitliche Anordnung des Kupplungszapfen 24 und/ oder der Kupplungsfläche 27 ist ein Freiraum 29 gebildet. In diesem Freiraum 29 findet während der sachgerechten Verwendung und/ oder korrekten Haltung während einer Implantationsbehandlung der Antriebs- und Versorgungseinheit 1 ein Teil der Hand des Anwenders Platz.

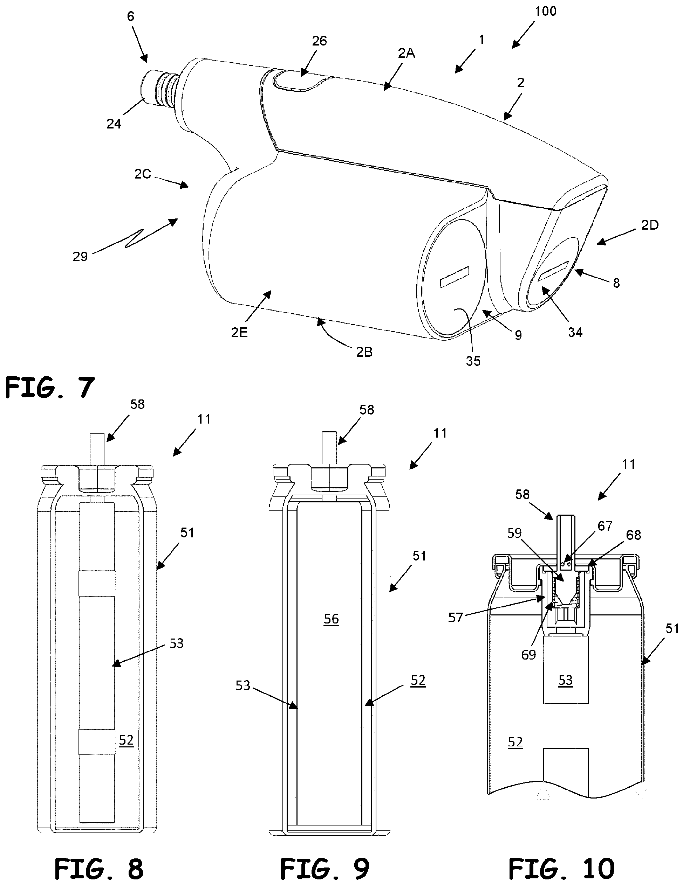

An die am oder im Außengehäuse 2, insbesondere an der zweiten Endfläche 2D, vorgesehene zweite Anschlussvorrichtung 8 ist lösbar einer Batterie 10, insbesondere ein wiederholt aufladbarer Akkumulator, zur Versorgung des Elektromotors 3 mit elektrischer Energie anschließbar. Die zweite Anschlussvorrichtung 8 umfasst eine Öffnung 19 und eine zylindrische Aufnahme 20, in welche die Batterie 10 einführbar und lagerbar ist. Die zylindrische Aufnahme 20 kann derart bemessen sein, dass sie nur einen Teil der Batterie 10 aufnimmt, so dass ein Abschnitt der Batterie 10 aus der Aufnahme 20 und/ oder dem Außengehäuse 2 ragt, so dass die Batterie 10 unkompliziert aus der Aufnahme 20 entnommen bzw. in die Aufnahme 20 eingeführt werden kann, siehe Figuren 3 und 4. Alternativ, siehe Figur 7, ist die Aufnahme 20 derart bemessen, dass sie die gesamte Batterie 10 aufnimmt und/ oder umschließt, und vorzugsweise durch einen Verschluss 34, zum Beispiel einen Deckel, verschließbar ist, so dass das Eindringen von Verschmutzungen in die Aufnahme 20 verringert ist. Der Verschluss 34 ist relativ zu der Öffnung 19 bewegbar, zum Beispiel drehbar, verschraubbar, entfernbar oder klappbar, so dass die Batterie 10 ungehindert in die Aufnahme 20 einführbar und daraus entnehmbar ist.

Die am oder im Außengehäuse 2 vorgesehene dritte Anschlussvorrichtung 9 ist zum lösbaren Anschließen eines Flüssigkeitsbehälters oder Kühlfluidbehälters 11 ausgebildet. Die dritte Anschlussvorrichtung 9 weist eine Öffnung 21 und eine, vorzugsweise zylindrische, Aufnahme 22 auf. in welche der Flüssigkeitsbehälter oder Kühlfluidbehälter 11 einführbar ist. An einer der Öffnung 21 gegenüberliegenden Wand der dritten Anschlussvorrichtung 9 ist eine fluidübertragende Schnittstelle 23 zur Verbindung mit dem Flüssigkeitsbehälter oder Kühlfluidbehälter 11 vorgesehen, über die Flüssigkeit von dem Flüssigkeitsbehälter oder Kühlfluid von dem Kühlfluidbehälter 11 in die Antriebs- und Versorgungseinheit 1 übertragbar ist. Die zylindrische Aufnahme 22 kann derart bemessen sein, dass sie nur einen Teil des Flüssigkeitsbehälters oder Kühlfluidbehälters 11 aufnimmt, so dass ein Abschnitt des Flüssigkeitsbehälters oder Kühlfluidbehälters 11 aus der Aufnahme 22 und/ oder dem Außengehäuse 2 ragt, so dass der Flüssigkeitsbehälter oder Kühlfluidbehälter 11 unkompliziert aus der Aufnahme 22 entnommen bzw. in die Aufnahme 22 eingeführt werden kann, siehe Figuren 3 und 4. Alternativ, siehe Figur 7, ist die Aufnahme 22 derart bemessen, dass sie den gesamten Flüssigkeitsbehälter oder Kühlfluidbehälter 11 aufnimmt und/ oder umschließt, und vorzugsweise durch einen Verschluss 35, zum Beispiel einen Deckel, verschließbar ist, so dass das Eindringen von Verschmutzungen in die Aufnahme 22 verringert ist. Der Verschluss 35 ist relativ zu der Öffnung 21 bewegbar, zum Beispiel drehbar, verschraubbar, entfernbar oder klappbar, so dass der Flüssigkeitsbehälter oder Kühlfluidbehälter 11 ungehindert in die Aufnahme 22 einführbar und daraus entnehmbar ist.

Die erste, zweite und dritte Anschlussvorrichtung 6, 8, 9 sind eigenständige, voneinander getrennte Anschlussvorrichtungen, die an unterschiedlichen Positionen der mit einer Hand haltbare Antriebs- und Versorgungseinheit 1 und/ oder des Außengehäuses 2 angeordnet sind.

Die erste Anschlussvorrichtung 6 zum lösbaren Anschließen eines dentalen Hand- oder Winkelstücks 7 und die zweite Anschlussvorrichtung 8 zum lösbaren Anschließen einer Batterie 10 sind an den gegenüberliegenden Enden oder Endflächen 2C, 2D angeordnet. Die Enden 2C, 2D und/ oder erste und zweite Anschlussvorrichtung 6, 8 sind entlang einer die Antriebs- und Versorgungseinheit 1 durchsetzenden Längsachse 30 angeordnet. Die erste und die zweite Anschlussvorrichtung 6, 8, vorzugsweise auch das Hand- oder Winkelstück 7 und die Batterie 10, sind derart um die Längsachse 30 angeordnet, dass sich die Längsachse 30 zwischen diesen Bauteilen 6, 8, 7, 10 erstreckt.

Wie aus den Figuren 5 und 6 erkennbar ist, sind weitere Komponenten der Antriebs- und Versorgungseinheit 1 entlang der oder um die Längsachse 30 angeordnet, zum Beispiel der Elektromotor 3 und/ oder ein Getriebe 31. Der Elektromotor 3, das Getriebe 31 und die erste Anschlussvorrichtung 6 sind entlang einer Kupplungszapfen-Elektromotor-Mittelachse 28 angeordnet, die insbesondere auch die Rotationsachse des Elektromotors 3 bildet, wodurch eine kompakte Triebeinheit gebildet ist. Die Batterie 10 ist unterhalb des Elektromotors 3 und/ oder des Getriebes 31 und/ oder der ersten Anschlussvorrichtung 6 angeordnet, siehe Figur 5. Der Elektromotor 3 und/ oder das Getriebe 31 und/ oder die erste Anschlussvorrichtung 6 sind über der Batterie 10 angeordnet. Der Elektromotor 3 und/ oder das Getriebe 31 und/ oder die erste Anschlussvorrichtung 6 einerseits und die Batterie 10 andererseits sind in unterschiedlichen Ebenen innerhalb des Außengehäuses 2 angeordnet. Die Aufnahme 20 und/ oder die Batterie 10 weisen eine Batterie-Aufnahme-Mittelachse 32 auf, die parallel oder im Wesentlichen parallel zur Kupplungszapfen-Elektromotor-Mittelachse 28 angeordnet ist. Durch diese Anordnung des Elektromotors 3, des Getriebes 31 und der ersten und zweiten Anschlussvorrichtung 6, 8, gegebenenfalls mit der Batterie 10 und dem Hand- oder Winkelstück 7, ist der gesamte Antriebsstrang kompakt und geradlinig in einem Teilvolumen der Antriebs- und Versorgungseinheit 1 oder des Außengehäuses 2 angeordnet.

Die erste Anschlussvorrichtung 6 zum lösbaren Anschließen eines dentalen Hand- oder Winkelstücks 7 und die zweite Anschlussvorrichtung 8 zum lösbaren Anschließen einer Batterie 10 sind des Weiteren in einer Schnittebene 14 durch die Antriebs- und Versorgungseinheit 1 angeordnet. Die Schnittebene 14 erstreckt sich durch die gegenüberliegenden Enden 2C, 2D der Antriebs- und Versorgungseinheit 1 und durch die Oberseite 2A und Unterseite 2B des Außengehäuses 2, siehe Figur 5. Die jeweiligen Achsen 28, 30, 32 sind in der Schnittebene 14 angeordnet oder erstrecken sich darin. Auch sind der Elektromotor 3 und/ oder das Getriebe 31 in der Schnittebene 14 angeordnet und/ oder von dieser geschnitten.

Die dritte Anschlussvorrichtung 9 zum lösbaren Anschließen eines Flüssigkeitsbehälters oder Kühlfluidbehälters 11 und/ oder der darin aufgenommene Flüssigkeitsbehälter oder Kühlfluidbehälter 11 ist/ sind versetzt zu und/ oder außerhalb der Schnittebene 14 angeordnet. Die dritte Anschlussvorrichtung 9 ist versetzt zu der ersten und zweiten Anschlussvorrichtung 6, 8 angeordnet. Eine Fluid-Mittelachse 33 der dritten Anschlussvorrichtung 9 und/ oder des Flüssigkeitsbehälters oder Kühlfluidbehälter 11 ist parallel oder im Wesentlichen parallel zu den Achsen 28, 30, 32 angeordnet. Die dritte Anschlussvorrichtung 9 ist (in Bezug auf die Längsachse 30) zwischen den beiden in der Schnittebene 14 angeordneten Anschlussvorrichtungen 6, 8 vorgesehen. Die dritte Anschlussvorrichtung 9 ist in Bezug auf die erste Anschlussvorrichtung 6 zum lösbaren Anschließen eines dentalen Hand- oder Winkelstücks 7 rückversetzt und/ oder in Richtung der zweiten, Anschlussvorrichtung 8 versetzt angeordnet. Auch durch diese Rückversetzung der dritten Anschlussvorrichtung 9 ist der im Vorstehenden beschriebene Freiraum 29 gebildet.

In der Figur 6 ist zu erkennen, dass sich durch die Antriebs- und Versorgungseinheit 1 eine Mittelebene 15 erstreckt, wobei die erste Anschlussvorrichtung 6 zum Anschluss des Hand- oder Winkelstücks 7 auf einer ersten Seite 16 der Mittelebene 15 und die zweite und dritte Anschlussvorrichtung 8, 9 auf einer anderen, zweiten Seite 17 der Mittelebene 15 angeordnet sind. Die Mittelebene 15 ist rechtwinkelig oder im Wesentlichen im rechten Winkel zur Schnittebene 14 angeordnet. Die beiden Aufnahmen 20, 22 sind somit unterhalb der Mittelebene 15 und/ oder im Wesentlichen nebeneinander angeordnet und/ oder an dem Ende 2D der Antriebs- und Versorgungseinheit 1 angeordnet. Das gemeinsame Vorsehen der Aufnahmen 20, 22 am rückwärtigen Ende 2D ermöglicht einen ungehinderten Zugang zu den Aufnahmen 20, 22 und damit einen unkomplizierten Austausch der Batterie 10 und des Flüssigkeitsbehälters oder Kühlfluidbehälters 11.

Der Elektromotor 3 und das Getriebe 31 sind auf der ersten Seite 16 der Mittelebene 15 angeordnet. Der Elektromotor 3 und das Getriebe 31 sind des Weiteren derart in Bezug auf die zweite Anschlussvorrichtung 8 und/ oder eine an die zweiten Anschlussvorrichtung 8 angeschlossene Batterie 10 und die dritte Anschlussvorrichtung 9 und/ oder einen mit der dritten Anschlussvorrichtung 9 verbundenen Flüssigkeitsbehälter oder Kühlfluidbehälter 11 angeordnet, dass sich die Mittelebene 15 zwischen dem Elektromotor 3 und dem Getriebe 31 auf der ersten Seite 16 der Mittelebene 15 und der zweiten Anschlussvorrichtung 8 und der dritten Anschlussvorrichtung 9 auf der zweiten Seite 17 der Mittelebene 15 erstreckt. Die zweite und dritte Anschlussvorrichtung 8, 9 und/ oder die jeweiligen Aufnahmen 20, 22 befinden sich somit auf der zweiten Seite 17 der Mittelebene 15.

Im Außengehäuse 2 ist des Weiteren eine Steuervorrichtung 5 angeordnet, die zum Steuern der Antriebs- und Versorgungseinheit 1 und/ oder des damit verbundenen Hand- oder Winkelstücks 7 vorgesehen ist, siehe Figuren 5 und 6. Die Steuervorrichtung 5 weist eine Platine 18 auf, die zwischen dem Elektromotor 3 und der zweiten Anschlussvorrichtung 8, insbesondere der Aufnahme 20 angeordnet ist. Die Platine 18 weist mehrere Abschnitte auf, die gewinkelt mit einem Winkel ungleich 0° zueinander angeordnet sind, wobei zumindest ein Abschnitt zwischen dem Elektromotor 3 und der zweiten Anschlussvorrichtung 8 angeordnet ist. Zumindest ein Abschnitt der Platine 18 ist parallel zur Mittelebene 15 angeordnet und/ oder erstreckt sich in der Mittelebene 15.

Die Figur 3 zeigt eine dentale Implantationsvorrichtung 25, die eine mit einer Hand haltbare Antriebs- und Versorgungseinheit 1 und daran angeschlossen ein Hand- oder Winkelstück 7, eine Batterie 10 und einen Flüssigkeitsbehälter oder Kühlfluidbehälter 11 umfasst. Es ist zu erkennen, dass die dentale Implantationsvorrichtung 25 eine kompakte, stabile Einheit bildet, die durch das Außengehäuse 2 definiert oder begrenzt ist und an dem die drei Anschlussvorrichtung 6, 8, 9 gemeinsam, an ergonomisch optimierten Positionen angeordnet sind.

Im Folgenden ist der Aufbau der in den Figuren 7 - 15 dargestellten Flüssigkeitsbehälter oder Kühlfluidbehälter 11 beschrieben, die an eine medizinische, insbesondere dentale, Behandlungsvorrichtung 100 anschließbar sind, vorzugsweise an eine kabellose Behandlungsvorrichtung 100, 25, 1 ohne Leitungsverbindung zu einer außerhalb des Außengehäuses 2 angeordneten Energie- und Fluidquelle, um eine in dem Flüssigkeits- oder Kühlfluidbehälter 11 gefasste Flüssigkeit 54 an die medizinische, insbesondere dentale, Behandlungsvorrichtung 100, 25, 1 abzugeben. Der Flüssigkeits- oder Kühlfluidbehälter 11 wird im Folgenden zwecks Vereinfachung als Flüssigkeitsbehälter 11 bezeichnet.

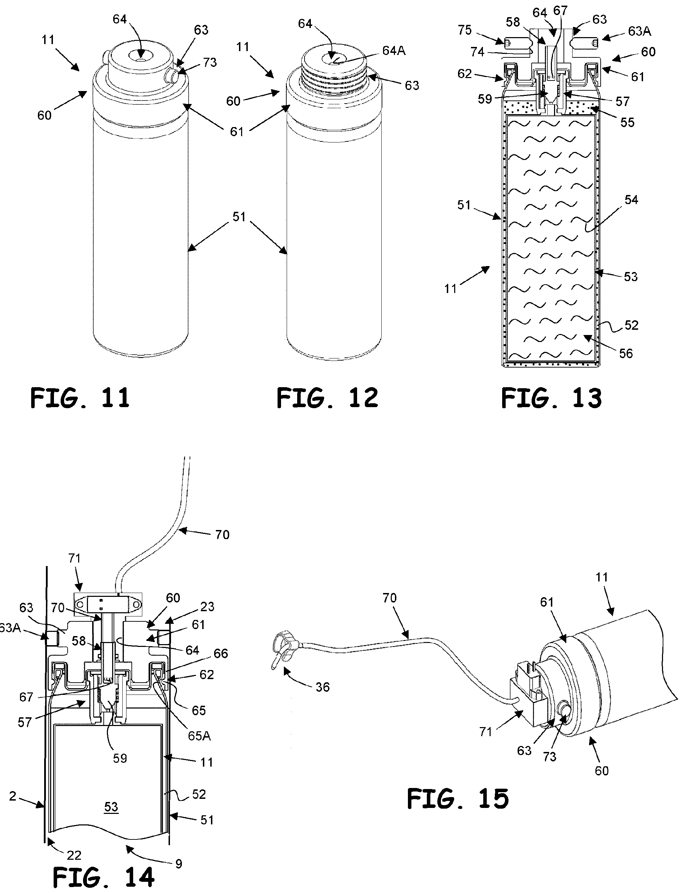

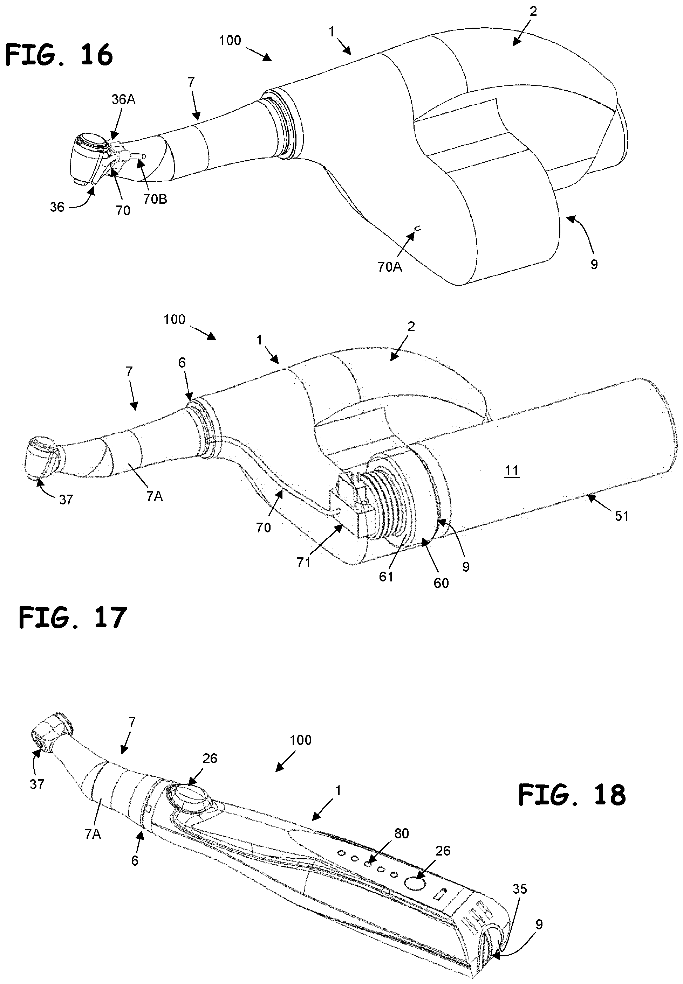

Der Flüssigkeitsbehälter 11 ist vorgesehen eine Flüssigkeit 54 zu fassen, die durch die Flüssigkeitsabgabevorrichtung 36, 37 (siehe Figuren 16, 17) der Behandlungsvorrichtung 100 abgegeben werden kann. Der Flüssigkeitsbehälter 11 ist an einer am oder im Außengehäuse 2 der Behandlungsvorrichtung 100 vorgesehenen Anschlussvorrichtung 9 lösbar anschließbar. Der Flüssigkeitsbehälter 11 weist eine, vorzugsweise zylindrische, Außenwand 51 auf, die einen Behälterinnenraum 52 des Flüssigkeitsbehälters 11 von der Umgebung abgrenzt. In dem Behälterinnenraum 52 ist ein flexibler Beutel 53 angeordnet, der ein Beutelvolumen 56 aufweist, in dem die Flüssigkeit 54 aufgenommen ist, siehe insbesondere Figur 13. Aufgrund seiner flexiblen und/ oder elastischen Außenhülle ist das Beutelvolumen 56 des flexiblen Beutels 53 veränderbar, insbesondere passt sich die flexible Außenhülle und/ oder das Beutelvolumen 56 im Wesentlichen der im flexiblen Beutel 53 aufgenommenen Flüssigkeitsmenge an und/ oder ändert sich das Beutelvolumen 56 entsprechend einer Änderung der im flexiblen Beutel 53 enthaltenen Flüssigkeitsmenge. Beispielsweise verringert sich das Beutelvolumen 56, wenn Flüssigkeit 54 aus dem flexiblen Beutel 53 gefördert wird, und vergrößert sich das Beutelvolumen 56, wenn Flüssigkeit 54 in dem flexiblen Beutel 53 aufgenommen wird.

In dem Flüssigkeitsbehälter 11 ist des Weiteren ein unter Druck stehendes Gas 55 (siehe Figur 13) aufgenommen, das sich in dem Behälterinnenraum 52, jedoch außerhalb des Beutelvolumens 56 befindet. Das unter Druck stehende Gas 55 umgibt somit den flexiblen Beutel 53 und eine gegebenenfalls darin vorgesehene Flüssigkeit 54. Das unter Druck stehende Gas 55 ist insbesondere zwischen dem flexiblen Beutel 53 und der Innenseite der Außenwand 51 vorgesehen. Abhängig von der Menge an Flüssigkeit 54, die sich in dem flexiblen Beutel 53 bzw. dem Flüssigkeitsbehälter 11 befindet, nimmt das unter Druck stehende Gas 55 unterschiedliche Volumina innerhalb des Flüssigkeitsbehälters 11 ein. Beispielsweise nimmt das unter Druck stehende Gas 55 ein größeres Volumen in dem Flüssigkeitsbehälter 11 ein, wenn im flexiblen Beutel 53 eine geringere Menge an Flüssigkeit 54 aufgenommen ist. Beispielsweise nimmt das unter Druck stehende Gas 55 ein geringeres Volumen in dem Flüssigkeitsbehälter 11 ein, wenn im flexiblen Beutel 53 eine größere Menge an Flüssigkeit 54 aufgenommen ist. Entsprechend verringert sich der Druck des unter Druck stehenden Gases 55, wenn das Gas 55 ein größeres Volumen im Flüssigkeitsbehälter 11 einnimmt und/ oder im flexiblen Beutel 53 eine geringere Menge an Flüssigkeit 54 aufgenommen ist. Der Druck des unter Druck stehenden Gases 55 erhöht sich, wenn das Gas 55 ein geringeres Volumen im Flüssigkeitsbehälter 11 einnimmt und/ oder im flexiblen Beutel 53 eine größere Menge an Flüssigkeit 54 aufgenommen ist.

Der Flüssigkeitsbehälter 11 umfasst des Weiteren ein Ventil 57 mit einem Ventilrohr 58, das mit dem flexiblen Beutel 53, insbesondere dem Beutelvolumen 56, in Fluidverbindung steht. Das Ventil 57 ist zwischen einer geschlossenen Position (siehe Figur 10), in der die in dem Beutelvolumen 56 aufgenommene Flüssigkeit 54 nicht aus dem flexiblen Beutel 53 entweichen kann, und einer geöffneten Position (siehe Figuren 13, 14), in der die in dem Beutelvolumen 56 aufgenommene Flüssigkeit 54 durch das Ventilrohr 58 aus dem flexiblen Beutel 53 entweichen kann, schaltbar. In der geöffneten Position treibt der Druck, den das unter Druck stehende Gas 55 auf den flexiblen Beutel 53, insbesondere die darin aufgenommene Flüssigkeit 54, ausübt, die Flüssigkeit 54 aus dem flexiblen Beutel 53 in das Ventilrohr 58, und insbesondere weiter in die medizinische, insbesondere dentale Behandlungsvorrichtung 100, vorzugsweise bis in die Flüssigkeitsabgabevorrichtung 36, 37 und darüber hinaus in die Umgebung.

Das in den Figuren 10, 13 und 14 dargestellte und im Folgenden beschriebene Ventil zeigt ein mögliches Ausführungsbeispiel eines Ventils des Flüssigkeitsbehälters 11. Selbstverständlich gibt es unterschiedliche andere Ventile oder Stellelemente, die ebenfalls geeignet sind eine zuverlässige, gerichtete Förderung der Flüssigkeit 54 aus dem Flüssigkeitsbehälter 11 nur dann zuzulassen, wenn der Flüssigkeitsbehälter 11 an die Behandlungsvorrichtung 100, 25, 1 angeschlossen ist. Das Ventil 57 umfasst einen beweglichen Ventilkörper 59, der mit einem Federelement 69 vorgespannt ist und/ oder auf den der Druck des im Behälterinnenraum 52 aufgenommenen, unter Druck stehenden Gases 55 wirkt. In der geschlossenen Position (siehe Figur 10) ist der Ventilkörper 59 durch das Federelement 69 und/ oder den Gasdruck in einen Ventilsitz des Ventils 57 und/ oder in Richtung eines Dichtelements 68 des Flüssigkeitsbehälters 11 gedrückt. Der Ventilkörper 59 ist mit dem Ventilrohr 58 verbunden, so dass mit der Bewegung des Ventilkörpers 59 auch das Ventilrohr 58 und zumindest eine im Ventilrohr 58 angeordnete Ventilöffnung 67, durch welche die Flüssigkeit 54 aus dem Ventil 57 und/ oder dem flexiblen Beutel 53 in die medizinische, insbesondere dentale, Behandlungsvorrichtung 100, 25, 1 fließen kann, bewegt werden.

Das Dichtelement 68 ist relativ zu dem Ventil 57, dem Ventilrohr 58 und/ oder der Ventilöffnung 67 unbeweglich angeordnet. Das Dichtelement 68 umgibt das Ventilrohr 58 und/ oder die zumindest eine Ventilöffnung 67. Das Dichtelement 68 ist zum Beispiel als Dichtring oder ringförmiges Dichtelement ausgebildet, wobei sich das Ventilrohr 58 durch eine zentrale Öffnung des ringförmigen Dichtelements 68 erstreckt. In der geschlossenen Position des Ventils 57 ist das Ventilrohr 58, insbesondere die zumindest eine Ventilöffnung 67, derart angeordnet, dass das Dichtelement 68 den Förderweg der Flüssigkeit 54 aus dem Ventil 57 und/ oder durch das Ventil 57 und/ oder die Ventilöffnung 67 verschließt, so dass die Flüssigkeit 54 nicht aus dem Flüssigkeitsbehälter 11 förderbar ist oder entweichen kann (siehe Figur 10).

In der geöffneten Position ist der Ventilkörper 59 entgegen der Kraft des Federelements 69 und/ oder des Gasdrucks des Gases 55 vom Ventilsitz des Ventils 57 wegbewegt und/ oder die Ventilöffnung 67 in eine Position bewegt, in der das Dichtelement 68 den Förderweg der Flüssigkeit 54 durch das Ventil 57 und/ oder die Ventilöffnung 67 nicht verschließt oder nicht abdichtet, so dass die Flüssigkeit 54 aus dem flexiblen Beutel 53 fließen kann (siehe Figuren 13, 14). Die Bewegung des Ventilkörpers 59 und des Ventilrohrs 58 von der geschlossenen in die geöffnete Position entgegen der Kraft des Federelements 69 und/ oder der auf den Ventilkörper 59 wirkende Druckkraft des unter Druck stehenden Gases 55 wird vorzugsweise während und/ oder durch den Anschluss des Flüssigkeitsbehälters 11 an die Anschlussvorrichtung 9 bewirkt. An dem Flüssigkeitsbehälter 11 ist ein Konnektor 60 vorgesehen, der den Flüssigkeitsbehälter 11 mit der medizinischen, insbesondere dentalen, Behandlungsvorrichtung 100, 25, 1 derart lösbar verbindet, dass die Flüssigkeit 54 aus dem flexiblen Beutel 53 und durch das Ventilrohr 58 in eine Flüssigkeitsleitung 70 der medizinischen, insbesondere dentalen, Behandlungsvorrichtung 100, 25, 1 förderbar ist. Der Konnektor 60 weist einen Konnektorkörper 61 auf, an dem ein erstes Verbindungselement 62 zum Verbinden des Konnektors 60 mit der Außenwand 51 des Flüssigkeitsbehälters 11 (siehe Figuren 13, 14) und ein zweites Verbindungselement 63 zum Verbinden mit der medizinischen, insbesondere dentalen, Behandlungsvorrichtung 100, 25, 1 vorgesehen ist (siehe Figuren 11, 12, 13).

Das erste Verbindungselement 62 ist an einer Innenseite des Konnektors 60 angeordnet, so dass es sich in Richtung der Außenwand 51 des Flüssigkeitsbehälters 11 erstreckt. Der Konnektor 60 umfasst eine kreisförmige Schürze oder einen kreisförmigen, schürzenartigen Fortsatz 66, an dem, insbesondere an dessen Innenseite, das erste Verbindungselement 62 vorgesehen ist oder als Teil davon ausgebildet ist. Das erste Verbindungselement 62 ist insbesondere als mechanisches Verbindungselement ausgebildet: es umfasst zumindest eine Rastnase 65, die in ein erstes Gegenverbindungselement 65A an der Außenwand 51, insbesondere einen Rücksprung oder eine Nut, des Flüssigkeitsbehälters 11 eingreift. Das erste Verbindungselement 62 und Gegenverbindungselement 65A bilden somit eine formschlüssige Verbindung 65, 65A zwischen dem Konnektor 60 und dem Flüssigkeitsbehälter 11, jedoch sind klarerweise auch andere Verbindungsarten möglich, insbesondere eine kraftschlüssige Verbindung.

Das zweite Verbindungselement 63 zum Verbinden des Konnektors 60 mit der medizinischen, insbesondere dentalen, Behandlungsvorrichtung 100, 25, 1 ist an einer Außenseite des Konnektors 60 angeordnet und/ oder derart positioniert, dass es sich vom Konnektorkörper 61 weg und/ oder in Richtung der Behandlungsvorrichtung 100, 25, 1 erstreckt. Das zweite Verbindungselement 63 umfasst ein mechanisches, insbesondere formschlüssiges und/ oder kraftschlüssiges Verbindungselement, zum Beispiel eine Bajonettverbindung mit Fortsätzen 73 am Konnektor 60 zum Eingriff in eine Nut an der Behandlungsvorrichtung 100, 25, 1 (siehe Figur 11), ein Gewinde (siehe Figur 12) und/ oder eine Rastvorrichtung (siehe Figur 13), bei der ein bewegliches Rastelement 75 der Behandlungsvorrichtung 100, 25, 1 in eine Aufnahme 74 am Konnektor 60 eingreift. An der medizinischen, insbesondere dentalen, Behandlungsvorrichtung 100, 25, 1, insbesondere an der (dritten) Anschlussvorrichtung 9 zum lösbaren Anschließen des Flüssigkeitsbehälters 11, ist ein entsprechendes (zweites) Gegenverbindungselement 63A (siehe Figuren 13, 14), zum Beispiel die im Vorstehenden genannte Nut der Bajonettverbindung, ein Gewinde oder das genannte bewegliche Rastelement 75 vorgesehen, welches mit dem zweiten Verbindungselement 63 eine Verbindung eingeht, so dass der Flüssigkeitsbehälter 11 mit dem und durch den Konnektor 60 zuverlässig und insbesondere flüssigkeitsdicht mit der medizinischen, insbesondere dentalen, Behandlungsvorrichtung 100, 25, 1 verbunden ist.

Der Konnektor 60 ist an jenem Ende des Flüssigkeitsbehälters 11 angeordnet, an dem das Ventil 57 vorgesehen ist, wobei der Konnektorkörper 61 einen Durchgang 64 aufweist, in welchen sich das Ventilrohr 58 und/ oder eine Flüssigkeitsleitung 70 der medizinischen, insbesondere dentalen, Behandlungsvorrichtung 100, 25, 1 erstreckt, wenn der Flüssigkeitsbehälters 11 an die Behandlungsvorrichtung 100, 25, 1, insbesondere an die (dritte) Anschlussvorrichtung 9, angeschlossen ist. Der Durchgang 64 wird von einer, vorzugsweise zylindrischen, Wand 64A begrenzt. Die Wand 64A umgibt das Ventilrohr 58 und/ oder die Flüssigkeitsleitung 70. Vorzugsweise ragt das freie, vom Ventil 57 entfernte Ende der Wand 64A über das freie, vom Ventil 57 entfernte Ende des Ventilrohrs 58 und/ oder das das freie, vom Ventil 57 entfernte Ende des Ventilrohrs 58 erstreckt sich in den Durchgang 64, jedoch nicht über dessen freies Ende hinaus (siehe Figuren 13, 14). Damit wird in vorteilhafterweise ein Verschieben des Ventilrohrs 58 entgegen der Federkraft des Federelements 69 und/ oder dem Gasdruck des Gases 55 und damit die (unbeabsichtigte) Abgabe der Flüssigkeit 54 von dem Flüssigkeitsbehälter 11, wenn dieser nicht an die Behandlungsvorrichtung 100, 25, 1 angeschlossen ist, zumindest erschwert oder verhindert.

Die Figur 14 zeigt schematisch in einer Schnittansicht den Flüssigkeitsbehälter 11 mit dem Konnektor 60, der in der (dritten) Anschlussvorrichtung 9 der medizinischen, insbesondere dentalen, Behandlungsvorrichtung 100, 25, 1 aufgenommen und mit einem Stellelement 71, insbesondere einem Ventil, und einer Flüssigkeitsleitung 70 der Behandlungsvorrichtung 100, 25, 1 verbunden ist. Der Flüssigkeitsbehälter 11 ist an der fluidübertragenden Schnittstelle 23 über den Konnektor 60, insbesondere das zweite Verbindungselement 63, mit der Behandlungsvorrichtung 100, 25, 1, insbesondere dem zweiten Gegenverbindungselement 63A, derart verbunden, dass die Flüssigkeit 54 aus dem flexiblen Beutel 53 durch das Ventil 57, das Ventilrohr 58 zum Ventil 71 und, falls das Ventil 71 geöffnet ist, durch die Flüssigkeitsleitung 70 bis zur Flüssigkeitsabgabevorrichtung 36, 37 und in die Umgebung förderbar ist, siehe auch Figuren 15 und 17.

Wie aus der Figur 14 zu erkennen ist, ist durch den Anschluss des Flüssigkeitsbehälter 11 an die Behandlungsvorrichtung 100, 25, 1 das Ventil 57 des Flüssigkeitsbehälters 11 in die geöffnete Position bewegt. Diese Bewegung wird durch den Kontakt des Stellelements oder Ventils 71 und/ oder der Flüssigkeitsleitung 70 der Behandlungsvorrichtung 100, 25, 1 mit dem Ventilrohr 58 bewirkt, wodurch das Ventilrohr 58 und der Ventilkörper 59 des Flüssigkeitsbehälters 11 gegen die Federkraft des Federelements 69 und/ oder des Gasdrucks des Gases 55 in Richtung des flexiblen Beutels 53 bewegt werden. Aufgrund des von dem unter Druck stehenden Gas 55 ausgeübten Drucks auf den flexiblen Beutel 53 und die darin enthaltene Flüssigkeit 54 fließt nun, bei geöffnetem Ventil 57, Flüssigkeit in das Ventil 57, durch das Ventilrohr 58 und zumindest bis zum Ventil 71. Solange der Flüssigkeitsbehälter 11 an die Behandlungsvorrichtung 100, 25, 1 angeschlossen ist, verharrt das Ventil 57 in der geöffneten Position. Wird der Flüssigkeitsbehälter 11 von der Behandlungsvorrichtung 100, 25, 1 getrennt, bewegen sich das Ventilrohr 58 und der Ventilkörper 59 aufgrund der Federkraft des Federelements 69 und/ oder des Gasdrucks des Gases 55 in Richtung des Konnektors 60, wodurch, wie im Vorstehenden beschrieben, das Dichtelement 68 den Förderweg der Flüssigkeit 54 aus dem oder durch das Ventil 57 und/ oder die Ventilöffnung 67 verschließt, so dass das Ventil 57 die geschlossene Position einnimmt und keine Flüssigkeit 54 aus dem Flüssigkeitsbehälter austreten kann.

Das im Außengehäuse 2 der medizinischen, insbesondere dentalen, Behandlungsvorrichtung 100, 25, 1 vorgesehene Stellelement 71, das insbesondere ein Ventil umfasst, steuert die Förderung der Flüssigkeit 54 aus dem Flüssigkeitsbehälter 11 und/ oder die Abgabe der Flüssigkeit 54 über die Flüssigkeitsabgabevorrichtung 36, 37. Wie im Vorstehenden beschrieben, fließt die Flüssigkeit 54 bei an die Behandlungsvorrichtung 100, 25, 1 angeschlossenem Flüssigkeitsbehälter 11 und somit bei geöffnetem Ventil 57 des Flüssigkeitsbehälters 11 zumindest bis zu dem Ventil 71. Nimmt das Ventil 71 eine geöffnete Stellung ein, dann ist die Förderung der Flüssigkeit 54 über die Flüssigkeitsleitung 70 und die Flüssigkeitsabgabevorrichtung 36, 37 und Abgabe an die Umgebung möglich. Nimmt das Ventil 71 eine geschlossene Stellung ein, dann ist die Förderung und Abgabe der Flüssigkeit 54 über die Flüssigkeitsleitung 70 und die Flüssigkeitsabgabevorrichtung 36, 37 unterbunden. Das Stellelement oder Ventil 71 ist vorzugsweise nahe der fluidübertragenden Schnittstelle 23 und/ oder (dritten) Anschlussvorrichtung 9 angeordnet.

Zum Betätigen des Stellelements 71 zwischen der geöffneten und der geschlossenen Stellung ist eine Steuervorrichtung vorgesehen, die vom Anwender der medizinischen, insbesondere dentalen, Behandlungsvorrichtung 100, 25, 1 bedienbar ist. Vorzugsweise steuert die im Außengehäuse 2 angeordnete Steuervorrichtung 5 (siehe Figuren 5, 6) das Ventil 71. Gemäß einem Ausführungsbeispiel ist die Steuervorrichtung 5 mit der Mensch-Maschine-Schnittstelle 26 (siehe Figuren 1-3) operativ verbunden ist, so dass ein Anwender der Behandlungsvorrichtung 100, 25, 1 das Ventil 71 über die Schnittstelle 26 bedienen kann. Alternativ ist zur Steuerung des Ventils 71 eine außerhalb und/ oder entfernt vom des Außengehäuse 2 angeordnete Mensch-Maschine-Schnittstelle 72 (siehe Figur 3) vorgesehen. Vorzugsweise umfasst die Schnittstelle 72 eine Fußsteuerung, vorzugsweise eine Funk-Fußsteuerung.

Die Figuren 16 und 17 zeigen zwei Varianten der Leitung der Flüssigkeit 54 zu der Flüssigkeitsabgabevorrichtung 36, 37. Gemäß Figur 16 fließt die aus dem Flüssigkeitsbehälter 11 geförderte Flüssigkeit 54 zumindest teilweise oder größtenteils außerhalb des Außengehäuses 2 der medizinischen, insbesondere dentalen, Behandlungsvorrichtung 100, 25, 1. Die Flüssigkeitsleitung 70 umfasst hierbei ein Anschlussrohr 70A, das stromabwärts des Ventils 71 das Außengehäuse 2 durchsetzt. Der Abschnitt der Flüssigkeitsleitung 70 von dem Ventil 71 bis zu dem Anschlussrohr 70A verläuft innerhalb des Außengehäuses 2. An dieses Anschlussrohr 70A ist ein Schlauch (nicht dargestellt) anschließbar, zum Beispiel steckbar, der außerhalb des Außengehäuses 2 verläuft und über den die Flüssigkeit 54 zu der Flüssigkeitsabgabevorrichtung 36 fließt. Der Schlauch ist auch an die Flüssigkeitsabgabevorrichtung 36, insbesondere einen Endabschnitt 70B der Flüssigkeitsleitung 70, der als Teil der Flüssigkeitsabgabevorrichtung 36 ausgebildet ist, anschließbar, zum Beispiel steckbar, so dass die Flüssigkeit 54 von dem Schlauch in die Flüssigkeitsabgabevorrichtung 36 übertreten kann. Die Flüssigkeitsabgabevorrichtung 36 umfasst eine Klammer 36A, mit welcher der Endabschnitt 70B an der Behandlungsvorrichtung 100, 25, 1, insbesondere an einem Hand- oder Winkelstück 7, befestigbar ist. Gemäß diesem Ausführungsbeispiel wird die Flüssigkeit 54 somit auch von außerhalb des Außengehäuses 2 und/ oder des Hand- oder Winkelstücks 7 an die Umgebung, das Werkzeug 4 und / oder eine Behandlungsstelle abgegeben.

Gemäß Figur 17 fließt die aus dem Flüssigkeitsbehälter 11 geförderte Flüssigkeit 54 bis zur Abgabe an die Umgebung durch die Flüssigkeitsabgabevorrichtung 37 innerhalb des Außengehäuses 2 der medizinischen, insbesondere dentalen, Behandlungsvorrichtung 100, 25, 1. Hierzu erstreckt sich die Flüssigkeitsleitung 70 innerhalb des Außengehäuses 2 und insbesondere auch innerhalb der Außenhülse 7A des Hand- oder Winkelstücks 7 bis zu einer Bohrung in der Außenhülse 7A, die Teil der Flüssigkeitsabgabevorrichtung 37 ist. Von dieser Bohrung wird die Flüssigkeit 54 an die Umgebung, das Werkzeug 4 und / oder eine Behandlungsstelle abgegeben. Die Flüssigkeitsleitung 70 erstreckt sich insbesondere vom Ventil 71 durch das Außengehäuse 2, über die erste Anschlussvorrichtung 6 zum lösbaren Anschließen eines dentalen Hand- oder Winkelstücks 7, durch das Hand- oder Winkelstück 7 bis zur Bohrung der Flüssigkeitsabgabevorrichtung 37. An der ersten Anschlussvorrichtung 6 ist die Flüssigkeitsleitung 70 gemäß diesem Ausführungsbeispiel in zwei voneinander trennbare Abschnitte geteilt, wovon ein Abschnitt im Hand- oder Winkelstück 7 und der andere Abschnitt in der Antriebs- und Versorgungseinheit 1 der medizinischen, insbesondere dentalen, Behandlungsvorrichtung 100 angeordnet ist. Die Trennbarkeit dieser beiden Abschnitte der Flüssigkeitsleitung 70 im Bereich der ersten Anschlussvorrichtung 6 ermöglicht somit, dass das Hand- oder Winkelstück 7 von der Antriebs- und Versorgungseinheit 1 lösbar ist.

Die Figur 18 zeigt ein alternatives Ausführungsbeispiel einer medizinischen, insbesondere dentalen, Behandlungsvorrichtung 100, die mit Flüssigkeit aus einem Flüssigkeitsbehälter 11 mit einem flexiblen Beutel 53 versorgbar ist. Diese Behandlungsvorrichtung 100 ist als kabellose, dentale, endodontische Behandlungsvorrichtung ausgebildet. Sie umfasst im Wesentlichen dieselben oder ähnliche Bauteile wie die im Vorstehenden Behandlungsvorrichtungen 100, 25, 1, die mit denselben Bezugszeichen versehen sind, so dass zur Vermeidung von Wiederholungen auf die vorstehende Beschreibung verwiesen wird.

Das Hand- oder Winkelstück 7 der endodontischen Behandlungsvorrichtung 100 der Figur 18 ist wiederum über eine erste Anschlussvorrichtung 6 lösbar an die Antriebs- und Versorgungseinheit 1 angeschlossen. Die erste Anschlussvorrichtung 6 ist zum mechanischen Übertragen einer rotierenden Antriebsbewegung, die der in der Antriebs- und Versorgungseinheit 1 angeordneten Elektromotor 3 erzeugt, auf eine Welle in dem Hand- oder Winkelstück 7 und zum Leiten einer Flüssigkeit oder eines Kühlfluids von der Antriebs- und Versorgungseinheit 1 in das Hand- oder Winkelstück 7 vorgesehen. Zur Versorgung der im Hand- oder Winkelstück 7 vorgesehenen Komponenten, zum Beispiel des Elektromotors 3 und einer Anzeigevorrichtung 80, mit elektrischer Energie ist wiederum eine, vorzugsweise wiederaufladbare, Batterie10 in der der Antriebs- und Versorgungseinheit 1 vorgesehen.

An einem Ende der endodontischen Behandlungsvorrichtung 100 der Figur 18 ist eine (dritte) Anschlussvorrichtung 9 zu erkennen, die durch einen Verschluss 35, zum Beispiel einen Deckel, verschließbar ist. An diese (dritte) Anschlussvorrichtung 9 ist, wie im Vorstehenden beschrieben, ein Flüssigkeitsbehälter 11 mit einem flexiblen Beutel 53 lösbar anschließbar, zur Versorgung der endodontischen Behandlungsvorrichtung 100 der Figur 18 mit einer Flüssigkeit. Der Aufbau des Flüssigkeitsbehälters 11, die Flüssigkeitsförderung durch das unter Druck stehende Gas 55 und über die Flüssigkeitsleitung 70 bis zur Flüssigkeitsabgabevorrichtung 36, 37, die Funktionsweise der Ventile 57, 71 und alle weiteren im Vorstehenden genannten und beschriebenen Merkmale der Flüssigkeitsförderung und -abgabe können in entsprechender Weise in der endodontischen Behandlungsvorrichtung 100 der Figur 18 implementiert sein, so dass zur Vermeidung von Wiederholungen auf die vorstehende Beschreibung verwiesen wird.

Die beschriebenen oder dargestellten Ausführungsbeispiele dienen insbesondere der Veranschaulichung der Erfindung. Die in einem Ausführungsbeispiel offenbarten Merkmale sind daher nicht auf dieses Ausführungsbeispiel beschränkt, sondern sind einzeln oder gemeinsam mit einem oder mehreren Merkmalen eines der anderen Ausführungsbeispiele kombinierbar.

## Patentansprüche

1. Medizinische, insbesondere dentale, Behandlungsvorrichtung (100, 25, 1), umfassend:
ein Außengehäuse (2), welches die medizinische, insbesondere dentale, Behandlungsvorrichtung (1) von der Umgebung abgrenzt,
eine im Außengehäuse (2) angeordnete Antriebsvorrichtung (3) zum Antrieb eines mit der medizinischen, insbesondere dentalen, Behandlungsvorrichtung verbindbaren Werkzeugs (4),
eine im Außengehäuse (2) angeordneten Steuervorrichtung (5) zum Steuern der medizinischen, insbesondere dentalen Behandlungsvorrichtung (1),
eine Flüssigkeitsabgabevorrichtung (36, 37), welche zur Abgabe einer Flüssigkeit (54) von der medizinischen, insbesondere dentalen, Behandlungsvorrichtung (100, 25, 1) in die Umgebung ausgebildet ist, und
einen Flüssigkeitsbehälter (11), welcher die durch die Flüssigkeitsabgabevorrichtung (36, 37) abgebbare Flüssigkeit fasst und an einer am oder im Außengehäuse (2) vorgesehene Anschlussvorrichtung (9) lösbar anschließbar ist, wobei der Flüssigkeitsbehälter (11) eine Außenwand (51) aufweist, die einen Behälterinnenraum (52) des Flüssigkeitsbehälters (11) von der Umgebung abgrenzt, **dadurch gekennzeichnet, dass**
der Flüssigkeitsbehälters (11) des Weiteren umfasst:
einen in dem Behälterinnenraum (52) aufgenommenen flexiblen Beutel (53) mit einem Beutelvolumen (56), in dem die Flüssigkeit (54) aufgenommen ist,
ein unter Druck stehendes Gas (55), das in dem Behälterinnenraum (52), jedoch außerhalb des Beutelvolumens (56) vorgesehen ist, und
ein Ventil (57) mit einem Ventilrohr (58), das mit dem Beutelvolumen (56) in Fluidverbindung steht, wobei das Ventil (57) zwischen einer geschlossenen Position, in der die in dem Beutelvolumen (56) aufgenommene Flüssigkeit (54) nicht aus dem flexiblen Beutel (53) entweichen kann, und einer geöffneten Position, in der die in dem Beutelvolumen (56) aufgenommene Flüssigkeit (54) durch das Ventilrohr (58) aus dem flexiblen Beutel (53) entweichen kann, schaltbar ist, wobei in der geöffneten Position der Druck, den das unter Druck stehende Gas (55) auf den flexiblen Beutel (53) ausübt, die Flüssigkeit (54) aus dem flexiblen Beutel (53) in das Ventilrohr (58) treibt, und
einen Konnektor (60), der den Flüssigkeitsbehälter (11) mit der medizinischen, insbesondere dentalen, Behandlungsvorrichtung (100, 25, 1) derart verbindet, dass die Flüssigkeit (54) aus dem flexiblen Beutel (53) und durch das Ventilrohr (58) in eine Flüssigkeitsleitung (70) der medizinischen, insbesondere dentalen, Behandlungsvorrichtung (100, 25, 1) förderbar ist.

2. Medizinische, insbesondere dentale, Behandlungsvorrichtung (100, 25, 1) nach Anspruch 1, **gekennzeichnet durch**
ein im Außengehäuse (2) der medizinischen, insbesondere dentalen, Behandlungsvorrichtung (100, 25, 1) vorgesehenes Stellelement (71), das die Abgabe der Flüssigkeit (54) steuert.

3. Medizinische, insbesondere dentale, Behandlungsvorrichtung (100, 25, 1) nach Anspruch 2, **dadurch gekennzeichnet, dass**
das Stellelement (71) durch die im Außengehäuse (2) angeordnete Steuervorrichtung (5) und über eine an der medizinischen, insbesondere dentalen, Behandlungsvorrichtung (100, 25, 1) vorgesehene Mensch-Maschine-Schnittstelle (26) oder durch eine entfernt vom Außengehäuse (2) angeordnete Schnittstelle (72), zum Beispiel durch eine Fußsteuerung, steuerbar ist.

4. Medizinische, insbesondere dentale, Behandlungsvorrichtung (100, 25, 1) nach einem der vorstehenden Ansprüche, **dadurch gekennzeichnet, dass**
der Konnektor (60) einen Konnektorkörper (61) aufweist, an dem ein erstes, Verbindungselement (62) zum Verbinden des Konnektors (60) mit der Außenwand (51) des Flüssigkeitsbehälters (11) und ein zweites Verbindungselement (63) zum Verbinden mit der medizinischen, insbesondere dentalen, Behandlungsvorrichtung (100, 25, 1) vorgesehen ist.

5. Medizinische, insbesondere dentale, Behandlungsvorrichtung (100, 25, 1) nach Anspruch 4, **dadurch gekennzeichnet, dass**
an dem Konnektorkörper (61) kein Stellelement zum Stellen des Ventils (57) des Flüssigkeitsbehälters (11) zwischen der geschlossenen und der geöffneten Position vorgesehen ist.

6. Medizinische, insbesondere dentale, Behandlungsvorrichtung (100, 25, 1) nach einem der vorstehenden Ansprüche, **dadurch gekennzeichnet, dass**
der Flüssigkeitsbehälter (11) keinen Finger-Druckknopf oder Finger-Drehknopf zum Stellen des Ventils (57) des Flüssigkeitsbehälters (11) zwischen der geschlossenen und der geöffneten Position umfasst.

7. Medizinische, insbesondere dentale, Behandlungsvorrichtung (100, 25, 1) nach einem der vorstehenden Ansprüche, **dadurch gekennzeichnet, dass**
der Konnektor (60) an einem Ende des Flüssigkeitsbehälters (11) angeordnet ist, an dem das Ventil (57) des Flüssigkeitsbehälters (11) vorgesehen ist, wobei insbesondere der Konnektorkörper (61) einen Durchgang (64) aufweist, in welchen sich das Ventilrohr (58) und/ oder eine Flüssigkeitsleitung (70) der medizinischen, insbesondere dentalen, Behandlungsvorrichtung (100, 25, 1) erstreckt.

8. Medizinische, insbesondere dentale, Behandlungsvorrichtung (100, 25, 1) nach einem der vorstehenden Ansprüche, **dadurch gekennzeichnet, dass**
die medizinische, insbesondere dentale, Behandlungsvorrichtung (100, 25, 1) als kabellose Behandlungsvorrichtung ohne Leitungsverbindung zu einer außerhalb des Außengehäuses (2) angeordneten Energie- und Fluidquelle ausgebildet ist, insbesondere als kabellose Antriebs- und Versorgungseinheit (1) für das Implantieren dentaler Implantate.

9. Flüssigkeitsbehälter (11), der an eine medizinische, insbesondere dentale, Behandlungsvorrichtung (100, 25, 1) anschließbar ist, um eine in dem Flüssigkeitsbehälter (11) gefasste Flüssigkeit (54) an die medizinische, insbesondere dentale, Behandlungsvorrichtung (100, 25, 1) abzugeben, wobei der Flüssigkeitsbehälter (11) umfasst:
eine Außenwand (51), welche einen Behälterinnenraum (52) des Flüssigkeitsbehälters (11) von der Umgebung abgrenzt, und **gekennzeichnet ist durch**
einen in dem Behälterinnenraum (52) aufgenommenen flexiblen Beutel (53) mit einem Beutelvolumen (56), in dem die an die medizinische, insbesondere dentale, Behandlungsvorrichtung (100, 25, 1) abzugebende Flüssigkeit (54) aufnehmbar ist,
ein unter Druck stehendes Gas (55), das in dem Behälterinnenraum (52), jedoch außerhalb des Beutelvolumens (56) vorgesehen ist, und
ein Ventil (57) mit einem Ventilrohr (58), das mit dem Beutelvolumen (56) in Fluidverbindung steht, wobei das Ventil (57) zwischen einer geschlossenen Position, in der die in dem Beutelvolumen (56) aufgenommene Flüssigkeit (54) nicht aus dem flexiblen Beutel (53) entweichen kann, und einer geöffneten Position, in der die in dem Beutelvolumen (56) aufgenommene Flüssigkeit (54) durch das Ventilrohr (58) aus dem flexiblen Beutel (53) entweichen kann, schaltbar ist, wobei in der geöffneten Position der Druck, den das unter Druck stehende Gas (55) auf den flexiblen Beutel (53) ausübt, die Flüssigkeit (54) aus dem flexiblen Beutel (53) in das Ventilrohr (58) treibt,
einen Konnektor (60), der den Flüssigkeitsbehälter (11) mit der medizinischen, insbesondere dentalen, Behandlungsvorrichtung (100, 25, 1) derart verbindet, dass die Flüssigkeit (54) aus dem flexiblen Beutel (53) und durch das Ventilrohr (58) in eine Flüssigkeitsleitung (70) der medizinischen, insbesondere dentalen, Behandlungsvorrichtung (100, 25, 1) förderbar ist,
wobei der Konnektor (60) einen Konnektorkörper (61) aufweist, an dem ein erstes Verbindungselement (62) zum Verbinden des Konnektors (60) mit der Außenwand (51) des Flüssigkeitsbehälters (11) und ein zweites Verbindungselement (63) zum Verbinden mit der medizinischen, insbesondere dentalen, Behandlungsvorrichtung (100, 25, 1) vorgesehen ist,
wobei an dem Konnektorkörper (61) kein Stellelement zum Stellen des Ventils (57) zwischen der geschlossenen und der geöffneten Position vorgesehen ist.

10. Flüssigkeitsbehälter (11) nach Anspruch 9, **gekennzeichnet durch**
ein mechanisches und/ oder magnetisches zweites Verbindungselement (63).

11. Flüssigkeitsbehälter (11) nach Anspruch 9 oder 10, **dadurch gekennzeichnet, dass**
der Flüssigkeitsbehälter (11) keinen Finger-Druckknopf oder Finger-Drehknopf zum Stellen des Ventils (57) zwischen der geschlossenen und der geöffneten Position umfasst.

12. Flüssigkeitsbehälter (11) nach einem der vorstehenden Ansprüche 9 - 11, **dadurch gekennzeichnet, dass**
der Konnektor (60) an einem Ende des Flüssigkeitsbehälters (11) angeordnet ist, an dem das Ventil (57) des Flüssigkeitsbehälters (11) vorgesehen ist.

13. Flüssigkeitsbehälter (11) nach Anspruch 12, **dadurch gekennzeichnet, dass**
der Konnektorkörper (61) einen Durchgang (64) aufweist, in welchen sich das Ventilrohr (58) und/ oder eine Flüssigkeitsleitung (70) der medizinischen, insbesondere dentalen, Behandlungsvorrichtung (100, 25, 1) erstreckt.

14. Flüssigkeitsbehälter (11) nach einem der vorstehenden Ansprüche, **dadurch gekennzeichnet, dass**
die Flüssigkeit (54) Wasser, eine wässrige Lösung, zum Beispiel eine Kochsalzlösung, ein Anästhetikum, einen medizinischen Wirkstoff und/ oder eine Indikatorflüssigkeit umfasst.

15. Verwendung eines Flüssigkeitsbehälters (11), der umfasst:
eine Außenwand (51), die einen Behälterinnenraum (52) des Flüssigkeitsbehälters (11) von der Umgebung abgrenzt,
einen in dem Behälterinnenraum (52) angeordneten flexiblen Beutel (53) mit einem Beutelvolumen (56), in dem eine Flüssigkeit (54) aufgenommen ist,
ein unter Druck stehendes Gas (55), das in dem Behälterinnenraum (52), jedoch außerhalb des Beutelvolumens (56) vorgesehen ist, und
ein Ventil (57) mit einem Ventilrohr (58), das mit dem Beutelvolumen (56) in Fluidverbindung steht, wobei das Ventil (57) zwischen einer geschlossenen Position, in der die in dem Beutelvolumen (56) aufgenommene Flüssigkeit (55) nicht aus dem flexiblen Beutel (53) entweichen kann, und einer geöffneten Position, in der die in dem Beutelvolumen (56) aufgenommene Flüssigkeit (54) durch das Ventilrohr (58) aus dem flexiblen Beutel (53) entweichen kann, schaltbar ist, wobei in der geöffneten Position der Druck, den das unter Druck stehende Gas (55) auf den flexiblen Beutel (53) ausübt, die Flüssigkeit (54) aus dem flexiblen Beutel (53) in das Ventilrohr (58) treibt, und
einen Konnektor (60), der den Flüssigkeitsbehälter (11) mit einer medizinischen, insbesondere dentalen, Behandlungsvorrichtung (100, 25, 1) derart verbindet, dass die Flüssigkeit (54) aus dem flexiblen Beutel (53) und durch das Ventilrohr (58) in eine Flüssigkeitsleitung (70) der medizinischen, insbesondere dentalen, Behandlungsvorrichtung (100, 25, 1) förderbar ist,
insbesondere Verwendung eines Flüssigkeitsbehälters (11) nach einem der vorstehenden Ansprüche 9 - 14,
als Flüssigkeitsquelle einer medizinischen, insbesondere dentalen, Behandlungsvorrichtung (100, 25, 1).

## Claims

1. A medical, in particular dental, treatment device (100, 25, 1), comprising:
an outer housing (2), which separates the medical, in particular dental, treatment device (1) from the surroundings,
a drive device (3) arranged in the outer housing (2) for driving a tool (4) connectable to the medical, in particular dental, treatment device,
a control device (5) arranged in the outer housing (2) for controlling the medical, in particular dental, treatment device (1),
a liquid dispensing device (36, 37), which is configured for dispensing a liquid (54) from the medical, in particular dental, treatment device (100, 25, 1) into the surroundings, and
a liquid container (11), which contains the liquid dispensable by the liquid dispensing device (36, 37) and can be detachably coupled to a coupling device (9) provided on or in the outer housing (2), wherein the liquid container (11) comprises an outer wall (51) which separates an interior container space (52) of the liquid container (11) from the surroundings, **characterized in that** the liquid container (11) further comprises:
a flexible bag (53) received in the interior container space (52), having a bag volume (56) in which the liquid (54) is received,
a pressurized gas (55), which is provided in the interior container space (52), but outside the bag volume (56), and
a valve (57) with a valve tube (58), which is in fluid communication with the bag volume (56), wherein the valve (57) is switchable between a closed position, in which the liquid (54) received in the bag volume (56) cannot escape from the flexible bag (53), and an open position, in which the liquid (54) received in the bag volume (56) can escape from the flexible bag (53) through the valve tube (58), wherein, in the open position, the pressure exerted by the pressurized gas (55) on the flexible bag (53) drives the liquid (54) from the flexible bag (53) into the valve tube (58), and
a connector (60), which connects the liquid container (11) to the medical, in particular dental, treatment device (100, 25, 1) in such a manner that the liquid (54) can be conveyed from the flexible bag (53) and through the valve tube (58) into a liquid line (70) of the medical, in particular dental, treatment device (100, 25, 1).

2. Medical, in particular dental, treatment device (100, 25, 1) according to claim 1, **characterized by** an actuating element (71) provided in the outer housing (2) of the medical, in particular dental, treatment device (100, 25, 1), which controls the dispensing of the liquid (54).

3. Medical, in particular dental, treatment device (100, 25, 1) according to claim 2, **characterized in that**
the actuating element (71) is controllable by the control device (5) arranged in the outer housing (2) and through a human-machine interface (26) provided on the medical, in particular dental, treatment device (100, 25, 1), or an interface (72) arranged remotely from the outer housing (2), for example by means of a foot control.

4. Medical, in particular dental, treatment device (100, 25, 1) according to one of the preceding claims, **characterized in that**
the connector (60) comprises a connector body (61) which provides a first connection element (62) for connecting the connector (60) to the outer wall (51) of the liquid container (11) and a second connection element (63) for connecting to the medical, in particular dental, treatment device (100, 25, 1).

5. Medical, in particular dental, treatment device (100, 25, 1) according to claim 4, **characterized in that**
no actuating element for actuating the valve (57) of the liquid container (11) between the closed position and the open position is provided on the connector body (61).

6. Medical, in particular dental, treatment device (100, 25, 1) according to one of the preceding claims, **characterized in that**
the liquid container (11) does not have a finger pushbutton or finger rotary knob for actuating the valve (57) of the liquid container (11) between the closed position and the open position.

7. Medical, in particular dental, treatment device (100, 25, 1) according to one of the preceding claims, **characterized in that**
the connector (60) is arranged at an end of the liquid container (11) at which the valve (57) of the liquid container (11) is provided, wherein, in particular, the connector body (61) comprises a passage (64) into which the valve tube (58) and/or a liquid line (70) of the medical, in particular dental, treatment device (100, 25, 1) extends.

8. Medical, in particular dental, treatment device (100, 25, 1) according to one of the preceding claims, **characterized in that**
the medical, in particular dental, treatment device (100, 25, 1) is configured as a cordless treatment device without a line connection to an energy and fluid source arranged outside the outer housing (2), in particular as a cordless drive and supply unit (1) for implanting dental implants.

9. Liquid container (11), which can be coupled to a medical, in particular dental, treatment device (100, 25, 1) in order to dispense a liquid (54) contained in the liquid container (11) to the medical, in particular dental, treatment device (100, 25, 1), wherein the liquid container (11) comprises:
an outer wall (51), which separates an interior container space (52) of the liquid container (11) from the surroundings, and is **characterized by**
a flexible bag (53) received in the interior container space (52) and having a bag volume (56), in which the liquid (54) to be dispensed to the medical, in particular dental, treatment device (100, 25, 1) can be received,
a pressurized gas (55), which is provided in the interior container space (52), but outside the bag volume (56), and
a valve (57) with a valve tube (58), which is in fluid communication with the bag volume (56), wherein the valve (57) is switchable between a closed position, in which the liquid (54) received in the bag volume (56) cannot escape from the flexible bag (53), and an open position, in which the liquid (54) received in the bag volume (56) can escape from the flexible bag (53) through the valve tube (58), wherein, in the open position, the pressure exerted by the pressurized gas (55) on the flexible bag (53) drives the liquid (54) from the flexible bag (53) into the valve tube (58), a connector (60), which connects the liquid container (11) to the medical, in particular dental, treatment device (100, 25, 1) in such a manner that the liquid (54) can be conveyed from the flexible bag (53) and through the valve tube (58) into a liquid line (70) of the medical, in particular dental, treatment device (100, 25, 1), wherein the connector (60) comprises a connector body (61), on which a first connection element (62) for connecting the connector (60) to the outer wall (51) of the liquid container (11) and a second connection element (63) for connecting to the medical, in particular dental, treatment device (100, 25, 1) are provided, wherein no actuating element for actuating the valve (57) between the closed position and the open position is provided on the connector body (61).

10. Liquid container (11) according to claim 9, **characterized by**
a mechanical and/or magnetic second connection element (63).

11. Liquid container (11) according to claim 9 or 10, **characterized in that**
the liquid container (11) does not have a finger pushbutton or finger rotary knob for actuating the valve (57) between the closed position and the open position.

12. Liquid container (11) according to one of the preceding claims 9 to 11, **characterized in that**
the connector (60) is arranged at an end of the liquid container (11) at which the valve (57) of the liquid container (11) is provided.

13. Liquid container (11) according to claim 12, **characterized in that**
the connector body (61) comprises a passage (64), into which the valve tube (58) and/or a liquid line (70) of the medical, in particular dental, treatment device (100, 25, 1) extends.

14. Liquid container (11) according to one of the preceding claims, **characterized in that**
the liquid (54) comprises water, an aqueous solution, for example a saline solution, an anesthetic, a medicinal active substance and/or an indicator liquid.

15. Use of a liquid container (11), the liquid container (11) comprising:
an outer wall (51), which separates an interior container space (52) of the liquid container (11) from the surroundings,
a flexible bag (53) arranged in the interior container space (52) and having a bag volume (56), in which a liquid (54) is received,
a pressurized gas (55), which is provided in the interior container space (52), but outside the bag volume (56), and
a valve (57) with a valve tube (58), which is in fluid communication with the bag volume (56), wherein the valve (57) is switchable between a closed position, in which the liquid (55) received in the bag volume (56) cannot escape from the flexible bag (53), and an open position, in which the liquid (54) received in the bag volume (56) can escape from the flexible bag (53) through the valve tube (58), wherein, in the open position, the pressure exerted by the pressurized gas (55) on the flexible bag (53) drives the liquid (54) from the flexible bag (53) into the valve tube (58), and
a connector (60), which connects the liquid container (11) to a medical, in particular dental, treatment device (100, 25, 1) in such a manner that the liquid (54) can be conveyed from the flexible bag (53) and through the valve tube (58) into a liquid line (70) of the medical, in particular dental, treatment device (100, 25, 1),
in particular use of a liquid container (11) according to one of the preceding claims 9 to 14, as a liquid source of a medical, in particular dental, treatment device (100, 25, 1).

## Revendications

1. Dispositif de traitement (100, 25, 1) médical, notamment dentaire, comprenant:
un boîtier extérieur (2), lequel délimite le dispositif de traitement (1) médical, notamment dentaire par rapport à l'environnement,
un dispositif d'entraînement (3), placé dans le boîtier extérieur (2), destiné à entraîner un outil (4) susceptible d'être assemblé avec le dispositif de traitement médical, notamment dentaire, un dispositif de commande (5) placé dans le boîtier extérieur (2), destiné à commander le dispositif de traitement (1) médical, notamment dentaire,
un distributeur de liquide (36, 37), lequel est conçu pour distribuer un liquide (54) du dispositif de traitement (100, 25, 1) médical, notamment dentaire dans l'environnement et
un réservoir à liquide (11), lequel contient le liquide susceptible d'être distribué par le distributeur de liquide (36, 37) et est susceptible de se raccorder de manière amovible sur un dispositif de raccordement (9) prévu sur ou dans le boîtier extérieur (2), le réservoir à liquide (11) comportant une paroi extérieure (51) qui délimite par rapport à l'environnement un espace intérieur (52) de réservoir du réservoir à liquide (11), **caractérisé en ce que**
le réservoir à liquide (11) comprend par ailleurs:
un sachet (53) souple, réceptionné dans l'espace intérieur (52) de réservoir, présentant un volume (56) de sachet, dans lequel est réceptionné le liquide (54),
un gaz (55) sous pression, qui est prévu dans l'espace intérieur (52) de réservoir, toutefois en dehors du volume (56) de sachet et
une valve (57), dotée d'un tube (58) de valve, qui se trouve en liaison fluidique avec le volume (56) de sachet, la valve (57) étant commutable entre une position fermée, dans laquelle le liquide (54) réceptionné dans le volume (56) de sachet ne peut pas s'échapper du sachet (53) souple et une position ouverte, dans laquelle le liquide (54) réceptionné dans le volume (56) de sachet peut s'échapper du sachet (53) souple à travers le tube (58) de valve, dans la position ouverte, la pression qu'exerce le gaz (55) sous pression sur le sachet (53) souple expulsant le liquide (54) hors du sachet (53) souple dans le tube (58) de valve et
un connecteur (60), qui assemble le réservoir à liquide (11) avec le dispositif de traitement (100, 25, 1) médical, notamment dentaire, de telle sorte que le liquide (54) puisse être acheminé hors du sachet (53) souple et à travers le tube (58) de valve dans une conduite (70) de liquide du dispositif de traitement (100, 25, 1) médical, notamment dentaire.

2. Dispositif de traitement (100, 25, 1) médical, notamment dentaire selon la revendication 1, **caractérisé par**
un élément de réglage (71), prévu dans le boîtier extérieur (2) du dispositif de traitement (100, 25, 1) médical, notamment dentaire, qui commande la distribution du liquide (54).

3. Dispositif de traitement (100, 25, 1) médical, notamment dentaire selon la revendication 2, **caractérisé en ce que**
l'élément de réglage (71) est susceptible d'être commandé par le dispositif de commande (5) placé dans le boîtier extérieur (2) et par l'intermédiaire d'une interface homme-machine (26), prévue sur le dispositif de traitement (100, 25, 1) ou d'une interface (72), placée à distance du boîtier extérieur (2), par exemple d'une commande aux pieds.

4. Dispositif de traitement (100, 25, 1) médical, notamment dentaire selon l'une quelconque des revendications précédentes, **caractérisé en ce que**
le connecteur (60) comporte un corps (61) de connecteur, sur lequel est prévu un premier élément d'assemblage (62), destiné à assembler le connecteur (60) avec la paroi extérieure (51) du réservoir à liquide (11) et un deuxième élément d'assemblage (63), destiné à être assemblé avec le dispositif de traitement (100, 25, 1) médical, notamment dentaire.

5. Dispositif de traitement (100, 25, 1) médical, notamment dentaire selon la revendication 4, **caractérisé en ce que**
sur le corps (61) de connecteur n'est prévu aucun élément de réglage pour le réglage de la valve (57) du réservoir à liquide (11) entre la position fermée et la position ouverte.

6. Dispositif de traitement (100, 25, 1) médical, notamment dentaire selon l'une quelconque des revendications précédentes, **caractérisé en ce que**
le réservoir à liquide (11) ne comprend aucun bouton-poussoir à actionnement par le doigt ou aucun bouton rotatif à actionnement par le doigt pour le réglage de la valve (57) du réservoir à liquide (11) entre la position fermée et la position ouverte.

7. Dispositif de traitement (100, 25, 1) médical, notamment dentaire selon l'une quelconque des revendications précédentes, **caractérisé en ce que**
le connecteur (60) est placé sur une extrémité du réservoir à liquide (11) sur laquelle est prévue la valve (57) du réservoir à liquide (11), notamment le corps (61) de connecteur comportant un passage (64) dans lequel s'étend le tube (58) de valve et / ou une conduite (70) de liquide du dispositif de traitement (100, 25, 1) médical, notamment dentaire.

8. Dispositif de traitement (100, 25, 1) médical, notamment dentaire selon l'une quelconque des revendications précédentes, **caractérisé en ce que**
le dispositif de traitement (100, 25, 1) médical, notamment dentaire est conçu sous la forme d'un dispositif de traitement non filaire, sans connexion par conduite vers une source d'énergie ou de fluide placée en dehors du boîtier extérieur (2), notamment sous la forme d'une unité d'entraînement et d'alimentation (1) non filaire, destinée à l'implantation d'implants dentaires.

9. Réservoir à liquide (11), qui est susceptible d'être raccordé sur un dispositif de traitement (100, 25, 1) médical, notamment dentaire, pour distribuer au dispositif de traitement (100, 25, 1) médical, notamment dentaire un liquide (54) contenu dans le réservoir à liquide (11), le réservoir à liquide (11) comprenant:
une paroi extérieure (51), laquelle délimite par rapport à l'environnement un espace intérieur (52) de réservoir du réservoir à liquide (11) et étant **caractérisé par**
un sachet (53) souple, réceptionné dans l'espace intérieur (52) de réservoir, doté d'un volume (56) de sachet, dans lequel peut être réceptionné le liquide (54) qui doit être distribué au dispositif de traitement (100, 25, 1) médical, notamment dentaire,
un gaz (55) sous pression, qui est prévu dans l'espace intérieur (52) de réservoir, toutefois en dehors du volume (56) de sachet et
une valve (57), dotée d'un tube (58) de valve, qui se trouve en liaison fluidique avec le volume (56) de sachet, la valve (57) étant commutable entre une position fermée, dans laquelle le liquide (54) réceptionné dans le volume (56) de sachet ne peut pas s'échapper du sachet (53) souple et une position ouverte, dans laquelle le liquide (54) réceptionné dans le volume (56) de sachet peut s'échapper du sachet (53) souple à travers le tube (58) de valve, dans la position ouverte, la pression qu'exerce le gaz (55) sous pression sur le sachet (53) souple expulsant le liquide (54) hors du sachet (53) souple dans le tube (58) de valve,
un connecteur (60), qui assemble le réservoir à liquide (11) avec le dispositif de traitement (100, 25, 1) médical, notamment dentaire de telle sorte que le liquide (54) puisse être acheminé hors du sachet (53) souple et à travers le tube (58) de valve dans une conduite (70) de liquide du dispositif de traitement (100, 25, 1) médical, notamment dentaire,
le connecteur (60) comportant un corps (61) de connecteur, sur lequel est prévu un premier élément d'assemblage (62), destiné à assembler le connecteur (60) avec la paroi extérieure (51) du réservoir à liquide (11) et un deuxième élément d'assemblage (63), destiné à être assemblé avec le dispositif de traitement (100, 25, 1) médical, notamment dentaire, sur le corps (61) de connecteur n'étant prévu aucun élément de réglage pour le réglage de la valve (57) entre la position fermée et la position ouverte.

10. Réservoir à liquide (11) selon la revendication 9, **caractérisé par**
un deuxième élément d'assemblage (63) mécanique et / ou magnétique.

11. Réservoir à liquide (11) selon la revendication 9 ou 10, **caractérisé en ce que**
le réservoir à liquide (11) ne comprend aucun bouton-poussoir à actionnement par le doigt ou bouton rotatif à actionnement par le doigt pour le réglage de la valve (57) entre la position fermée et la position ouverte.

12. Réservoir à liquide (11) selon l'une quelconque des revendications précédentes 9 à 11, **caractérisé en ce que**
le connecteur (60) est placé sur une extrémité du réservoir à liquide (11) sur laquelle est prévue la valve (57) du réservoir à liquide (11).

13. Réservoir à liquide (11) selon la revendication 12, **caractérisé en ce que**
le corps (61) de connecteur comporte un passage (64), dans lequel s'étend le tube (58) de valve et / ou une conduite (70) de liquide du dispositif de traitement (100, 25, 1) médical, notamment dentaire.

14. Réservoir à liquide (11) selon l'une quelconque des revendications précédentes, **caractérisé en ce que**
le liquide (54) comprend de l'eau, une solution aqueuse, par exemple une solution saline, un anesthésique, un principe actif médical et / ou un liquide indicateur.

15. Utilisation d'un réservoir à liquide (11), qui comprend:
une paroi extérieure (51), qui délimite par rapport à l'environnement un espace intérieur (52) de réservoir du réservoir à liquide (11),
un sachet (53) souple, placé dans l'espace intérieur (52) de réservoir, doté d'un volume (56) de sachet, dans lequel est réceptionné un liquide (54),
un gaz (55) sous pression, qui est prévu dans l'espace intérieur (52) de réservoir, toutefois en dehors du volume (56) de sachet et
une valve (57), dotée d'un tube (58) de valve, qui se trouve en liaison fluidique avec le volume (56) de sachet, la valve (57) étant commutable entre une position fermée, dans laquelle le liquide (55) réceptionné dans le volume (56) de sachet ne peut pas s'échapper du sachet (53) souple et une position ouverte, dans laquelle le liquide (54) réceptionné dans le volume (56) de sachet peut s'échapper du sachet (53) souple à travers le tube (58) de valve, dans la position ouverte, la pression qu'exerce le gaz (55) sous pression sur le sachet (53) souple expulsant le liquide (54) hors du sachet (53) souple dans le tube (58) de valve et
un connecteur (60), qui assemble le réservoir à liquide (11) avec le dispositif de traitement (100, 25, 1) médical, notamment dentaire de telle sorte que le liquide (54) puisse être acheminé hors du sachet (53) souple et à travers le tube (58) de valve dans une conduite (70) de liquide du dispositif de traitement (100, 25, 1) médical, notamment dentaire,
notamment utilisation d'un réservoir à liquide (11) selon l'une quelconque des revendications précédentes 9 à 14,
en tant que source de liquide pour un dispositif de traitement (100, 25, 1) médical, notamment dentaire.
